# EUROPÄISCHE PATENTSCHRIFT

(11) **EP 4 646 755 B1**
(45) Veröffentlichungstag und Bekanntmachung des Hinweises auf die Patenterteilung: **11.03.2026**
(21) Anmeldenummer: 25712940.3
(22) Anmeldetag: 17.03.2025
(51) Int. Cl.: H01M 10/6556, H01M 50/202, H01M 50/229, H01M 10/613, H01M 10/625, H01M 50/231, H01M 50/249

(54) **BATTERIEGEHÄUSEKOMPONENTE FÜR EINE TRAKTIONSBATTERIE ZUR KÜHLUNG VON MINDESTENS EINER BATTERIEKOMPONENTE**
BATTERY HOUSING COMPONENT FOR A TRACTION BATTERY FOR COOLING AT LEAST ONE BATTERY COMPONENT
COMPOSANT DE BOÎTIER DE BATTERIE POUR UNE BATTERIE DE TRACTION POUR REFROIDIR AU MOINS UN COMPOSANT DE BATTERIE

(30) Priorität: 26.03.2024 DE 102024108593
(43) Veröffentlichungstag der Anmeldung: 12.11.2025
(73) Patentinhaber: Kautex Textron GmbH & Co. KG, 53229 Bonn (DE)
(72) Erfinder: ELBAEK, Erik, 61350 Bad Homburg (DE); SATO, Masanori, Isehara-city, Kanagawa (JP); KAWAZU, Hajime, Mishima city, Shizuoka (JP); HEIDRICH, Daniel, 41569 Rommerskirchen (DE)
(74) Vertreter: Richly & Ritschel Patentanwälte PartG mbB
(86) Internationale Anmeldenummer: PCT/EP2025/057237
(87) Internationale Veröffentlichungsnummer: WO 2025/201950

(56) Entgegenhaltungen:
- DE-A1- 102016 103 411
- DE-A1- 102019 205 422
- DE-A1- 102020 125 387
- JP-A- 2021 501 972
- US-A1- 2020 153 056

## Beschreibung

Die vorliegende Erfindung betrifft eine Batteriegehäusekomponente für eine Traktionsbatterie zur Kühlung von zumindest einer Batteriekomponente und Verfahren zu deren Herstellung. Ferner betrifft die vorliegende Erfindung ein Traktionsbatteriegehäuse zur Aufnahme von zumindest einer Batteriekomponente in einem Aufnahmevolumen des Traktionsbatteriegehäuses, eine Traktionsbatterie für ein Kraftfahrzeug und ein Kraftfahrzeug mit einer Traktionsbatterie.

Traktionsbatterien für Kraftfahrzeuge weisen in einem Batteriegehäuse aufgenommene Batteriekomponenten in Form von Batteriezellen und/oder Batteriemodule auf, die der Speicherung und Abgabe von elektrischer Energie dienen. Sowohl bei der Beladung als auch bei der Entladung dieser Batteriekomponenten entsteht Wärme. Da die Batteriekomponenten ein thermisches Arbeitsfenster aufweisen, in dem die Beladung und die Entladung der Batteriekomponenten optimal funktionieren, muss die durch die Batteriekomponenten erzeugte Wärme durch das Batteriegehäuse abgeführt werden.

Zur Abführung der durch die Batteriekomponenten abgegebenen Wärmeenergie ist es bekannt, in einer Batteriegehäuseschale Kühlfluidkanäle zur Leitung eines Kühlfluids vorzusehen, die mittelbar mit den Batteriekomponenten wärmegekoppelt sind. Entsprechende Kühlkanäle sind beispielsweise in einer aus einem Metall gebildeten Kühlplatte angeordnet, auf die die Batteriekomponenten angeordnet werden.

Bei aus Kunststoff gefertigten Batteriegehäusen besteht hingegen das Problem, dass in der Batterieschale angeordnete Kühlfluidkanäle schwer fluiddicht gestaltet werden können. Insbesondere bei Überdrücken in den Kühlfluidkanälen tendieren diese zu Undichtigkeiten, so dass das Kühlfluid mit den Batteriekomponenten in Kontakt kommt und diese gegebenenfalls irreparabel beschädigt.

Ferner weisen die bekannten Batteriegehäuse eine Konstruktion und Materialkompositionen auf, die unter Einfluss intensiver mechanischer und/oder thermischer Belastungen einen verringerten Schutz vor Auslauf eines Kühlfluids bereitstellen. Die aus dem Stand der Technik bekannten Batteriegehäusekomponenten neigen somit unter gewissen Belastungen zu Leckagen.

Die DE 10 2019 205 422 A1 beschreibt einen Unterfahrschutz mit einem Aufnahmeberiech zur Aufnahme von zumindest einem Batteriemodul. Der Unterfahrschutz weist einen Boden auf, der eine mehrschichtige Kunststoffplatte mit mindestens zwei Schichten aufweist. Die dem Aufnahmebereich zugewandt erste Seite der Kunststoffplatte weist eine Kühlmittelrinne auf, welche von einer Kunststofffolie überdeckt ist, so dass die Kunststofffolie mit der Kühlmittelrinne einen Kühlkanal bildet.

Die US 2020/0153056 A1 beschreibt einen Akkumulator mit zumindest einem Speichermodul für elektrische Energie und zumindest einer Kühlvorrichtung zur Kühlung oder Temperierung für das zumindest eine Speichermodul, wobei die Kühlvorrichtung eine ein- oder mehrschichtige Folie aufweist und mit dieser Folie an dem zumindest einen Speichermodul anliegt.

Die DE 10 2016 103 411 A1 beschreibt eine Batterieeinrichtung für ein Elektrofahrzeug mit einer Mehrzahl von Batteriemodulen und wenigstens einer Aufnahmeeinrichtung zur Aufnahme der Batteriemodule, wobei die Aufnahmeeinrichtung eine mehrschichtige und unterhalb der Batteriemodule angeordnete Verbundplatte umfasst, welche durch mehrere teilweise miteinander verbundene Schichtbauteile zur Verfügung gestellt wird, wobei die Verbundplatte zur Anbindung der Batteriemodule ausgebildet ist und einen Strömungspfad für ein Kühlmedium einer Kühleinrichtung für die Batteriemodule umfasst und eine Bodenschutzwand zum Schutz de Batteriemodule bei einem Überfahren von Hindernissen bereitstellt.

Die JP 2021 501972 A1 beschreibt ein Batteriegehäuse für eine Antriebsbatterie mit einer zumindest teilweise aus thermoplastischem Kunststoff gebildeten Gehäuseschale, welche einen Aufnahmebereich zum Einsetzen einer Antriebsbatterie aufweist. Die Gehäuseschale weist eine Wandung mit einer mehrlagigen Sandwichstruktur auf. Wenigstens eine erste Lage der Sandwichstruktur ist zumindest abschnittsweise zu einer zweiten Lage der Sandwichstruktur beabstandet, so dass zwischen der ersten Lage und der zweiten Lage ein Wandungshohlraum gebildet ist, wobei der Wandungshohlraum zum Bevorraten und/oder verteilen eines Kühlmediums eingerichtet ist.

Die DE 10 2020 125 387 A1 beschreibt eine Vorrichtung zur Kühlung oder Temperierung für ein Speichermodul einer wiederaufladbaren Batterie, wobei die Vorrichtung eine erste mehrschichtige Folie aufweist, die zwei Kunststoffschichten und eine zwischen den Kunststoffschichten angeordnete elektrisch leitfähige Schicht oder eine Kunststoffschicht, eine Verstärkungsschicht und eine zwischen der Kunststoffschicht und der Verstärkungsschicht angeordnete elektrisch leitfähige Schicht aufweist und zumindest teilweise einen Kühlmittelkanal für ein Kühlfluid ausbildet, wobei die elektrisch leitfähige Schicht partiell freigelegt ist. Der vorliegenden Erfindung liegt die Aufgabe zugrunde, eine Batteriegehäusekomponente für eine Traktionsbatterie zur Kühlung einer Batteriekomponente bereitzustellen, die einen verbesserten Schutz vor Auslauf eines Kühlfluids aufweist.

Die der vorliegenden Erfindung zugrundeliegenden Aufgaben werden durch eine Batteriegehäusekomponente mit den Merkmalen der Ansprüche 1 oder 7 gelöst. Vorteilhafte Ausgestaltungen sind in den abhängigen Ansprüchen ausgeführt.

Im Genaueren wird die der vorliegenden Erfindung zugrundeliegende Aufgabe durch eine Batteriegehäusekomponente für eine Traktionsbatterie zur Kühlung von zumindest einer Batteriekomponente gelöst, die ein einen ersten Kunststoff aufweisendes Basisbauteil, ein faserverstärktes Verbindungsbauteil, welches eine Verbindungsbauteil-Innenfläche und eine Verbindungsbauteil-Außenfläche aufweist, und eine Mehrschichtfolie aufweist, wobei die Mehrschichtfolie eine Verbindungsfläche und eine Kontaktierungsfläche aufweist, wobei die Kontaktierungsfläche zur zumindest mittelbaren Kontaktierung der zumindest einen Batteriekomponente ausgebildet ist. Das faserverstärkte Verbindungsbauteil ist sandwichartig zwischen dem Basisbauteil und der Mehrschichtfolie angeordnet, wobei eine Basisbauteil-Innenfläche des Basisbauteils mit der Verbindungsbauteil-Innenfläche stoffschlüssig verbunden ist. Die Verbindungsfläche der Mehrschichtfolie ist mit der Verbindungsbauteil-Außenfläche des faserverstärkten Verbindungsbauteils unter Ausbildung von zumindest einem zwischen der Mehrschichtfolie und dem Verbindungsbauteil angeordneten Kühlfluidkanal zur Leitung eines Kühlfluids mittels einer Verbindungsschicht aus einem faserlosen thermoplastischen Kunststoff stoffschlüssig verbunden.

Die erfindungsgemäße Batteriegehäusekomponente weist den Vorteil auf, dass der zumindest eine Kühlfluidkanal stabiler ausgebildet ist, da dieser größeren Drücken innerhalb des Kühlfluidkanals standhalten kann. Durch Bereitstellen der zwischen der Mehrschichtfolie und dem Verbindungsbauteil angeordneten Verbindungsschicht aus einem faserlosen thermoplastischen Kunststoff ist die stoffschlüssige Verbindung zwischen der Mehrschichtfolie und dem faserverstärkten Verbindungsbauteil stabiler, so dass der Kühlfluidkanal größeren Drücken standhalten kann. Die stoffschlüssige Verbindung zwischen der Mehrschichtfolie und dem Verbindungsbauteil ist eine mediendichte Verbindung. Somit ist die Betriebssicherheit einer Traktionsbatterie, in der die erfindungsgemäße Batteriegehäusekomponente verbaut ist, erhöht, da in der Traktionsbatterie verbaute Batteriegehäusekomponenten, so wie beispielsweise Batteriezellen und/oder Batteriemodule, verbessert vor Kontakt mit dem in dem zumindest einen Kühlfluidkanal transportiertem Kühlfluid geschützt sind. Ferner weist die erfindungsgemäße Batteriegehäusekomponente durch die sandwichartige Anordnung des Verbindungsbauteils eine kompakte Bauweise auf und ist somit vorteilhaft platzsparend ausgestaltet.

Die Batteriegehäusekomponente ist vorzugsweise als Batteriegehäuseschale ausgebildet. Weiter vorzugsweise ist die Batteriekomponente als Unterbodenschutz ausgebildet. Ferner ist es auch möglich, dass die Batteriegehäusekomponente als Batteriegehäusedeckel ausgebildet ist.

Der erste Kunststoff des Basisbauteils ist vorzugsweise ein thermoplastischer Kunststoff. Vorzugsweise weist der erste Kunststoff ein Polyolefin, insbesondere ein Polypropylen auf. Weiter vorzugsweise weist der erste Kunststoff ein Polyamid auf.

Vorzugsweise ist der erste Kunststoff des Basisbauteils ein duroplastischer Kunststoff.

Vorzugsweise ist der erste Kunststoff des Basisbauteils faserverstärkt. Das in aus dem ersten Kunstsoff angeordnete Fasermaterial weist vorzugsweise Glasfasern und/oder Karbonfasern und/oder Aramidfasern auf. Das Fasermaterial weist vorzugsweise Kurzfasern und/oder Langfasern auf.

Das faserverstärkte Verbindungsbauteil ist vorzugsweise als Verbindungsplatte ausgebildet. Das faserverstärkte Verbindungsbauteil weist vorzugsweise einen thermoplastischen Kunststoff auf. Weiter vorzugsweise weist der thermoplastische Kunststoff ein Polyolefin, insbesondere ein Polypropylen auf. Weiter vorzugsweise weist der thermoplastische Kunststoff ein Polyamid auf.

Vorzugsweise weist das Verbindungsbauteil einen duroplastischen Kunststoff auf.

Weiter vorzugsweise weist das faserverstärkte Verbindungsbauteil Glasfasern und/oder Karbonfasern und/oder Aramidfasern auf. Das Fasermaterial weist vorzugsweise Kurzfasern und/oder Langfasern und/oder Endlosfasern auf.

Die stoffschlüssige Verbindung zwischen der Basisbauteil-Innenfläche und der Verbindungsbauteil-Innenfläche ist vorzugsweise durch eine Verschweißung und/oder Verklebung realisiert, besonders bevorzugt durch ein Heizelementschweißverfahren. Vorzugsweise ist die stoffschlüssige Verbindung zwischen der Basisbauteil-Innenfläche und der Verbindungsbauteil-Innenfläche durch ein Überspritzen (im Spritzgießverfahren) oder ein Überpressen (im Fließpressverfahren) realisiert.

Die Verbindungsschicht, mittels der die Mehrschichtfolie mit der Verbindungsbauteil-Außenfläche stoffschlüssig verbunden ist, weist vorzugsweise ein Polyolefin, weiter vorzugsweise ein Polypropylen auf.

Die Batteriekomponente ist vorzugsweise eine Batteriezelle. Weiter vorzugsweise ist die Batteriekomponente ein Batteriemodul.

Die zumindest eine Batteriekomponente wird vorzugsweise mit der Mehrschichtfolie in direkten, d.h. unmittelbaren Kontakt gebracht.

Vorzugsweise weist die Mehrschichtfolie eine Kontur auf, die zumindest teilweise an eine Geometrie der Batteriekomponentenangepasst ist. Die Batteriegehäusekomponente mit der entsprechend ausgebildeten Mehrschichtfolie ist somit besonders kompakt und vorteilhaft platzsparend ausgestaltet.

Ferner ist es auch möglich, dass die zumindest eine Batteriekomponente mit der Mehrschichtfolie mittels einer Wärmeleitpaste in mittelbaren Kontakt gebracht wird. Durch die Wärmeleitpaste wird die von der Batteriekomponente abgegebene Wärme besonders effizient unmittelbar auf die Mehrschichtfolie und mittelbar auf den Kühlfluidkanal übertragen, sodass durch die Wärmeleitpaste die Kühlung der Batteriekomponente besonders vorteilhaft erfolgt.

Da zwischen der Mehrschichtfolie und dem Verbindungsbauteil der zumindest eine Kühlfluidkanal gebildet ist, ist die Verbindungsfläche der Mehrschichtfolie nicht vollflächig sondern abschnittsweise mit der Verbindungsbauteil-Außenfläche des faserverstärkten Verbindungsbauteils stoffschlüssig verbunden.

Vorzugsweise weist die Batteriegehäusekomponente einen Kühlfluidzulauf und einen Kühlfluidablauf auf, die jeweils in den Kühlfluidkanal münden.

Vorzugsweise ist die Batteriegehäusekomponente derart ausgebildet, dass das Verbindungsbauteil eine Verbindungsbauteil-Außenschicht aufweist, die aus einem faserlosen thermoplastischen Kunststoff besteht und von der die Verbindungsbauteil-Außenfläche begrenzt ist, wobei die Verbindungsschicht zumindest teilweise durch die Verbindungsbauteil-Außenschicht gebildet ist.

Die entsprechend ausgebildete Batteriegehäusekomponente weist den Vorteil auf, dass der Fluidkanal nochmals druckfester ausgebildet ist. Ferner ist die entsprechend ausgebildete Batteriegehäusekomponente besonders einfach in deren Herstellung.

Vorzugsweise weist der faserlose thermoplastische Kunststoff ein Polyolefin, insbesondere ein Polypropylen auf. Weiter vorzugsweise weist der faserlose thermoplastische Kunststoff ein Polyamid auf.

Selbstverständlich kann die Verbindungsbauteil-Außenschicht auch weitere thermoplastische Kunststoffe oder Werkstoffe mit ähnlichen Werkstoffeigenschaften aufweisen.

Besonders bevorzugt weisen die Verbindungsbauteil-Außenschicht und die Verbindungsfläche der Mehrschichtfolie ähnliche oder gleiche Werkstoff-Komponenten und/oder Werkstoff-Eigenschaften auf, sodass diese besonders vorteilhaft stoffschlüssig miteinander gefügt werden können.

Vorzugsweise weist die Verbindungsbauteil-Außenschicht eine Schichtdicke von kleiner 1000 µm, vorzugsweise kleiner als 800 µm, weiter vorzugsweise kleiner 600 µm, weiter vorzugsweise kleiner 400 µm, weiter vorzugsweise kleiner 300 µm besonders bevorzugt kleiner 200 µm auf.

Vorzugsweise ist die Batteriegehäusekomponente derart ausgebildet, dass das Verbindungsbauteil eine Verbindungsbauteil-Innenschicht aufweist, die aus einem faserlosen thermoplastischen Kunststoff besteht und von der Verbindungsbauteil-Innenfläche begrenzt ist, wobei das Basisbauteil mit dem faserverstärkten Verbindungsbauteil mittels der Verbindungsbauteil-Innenschicht stoffschlüssig verbunden ist.

Die entsprechend ausgebildete Batteriegehäusekomponente weist den Vorteil auf, dass diese besonders einfach in deren Herstellung ist. Ferner weist die entsprechend ausgebildete Batteriegehäusekomponente durch den faserlosen thermoplastischen Kunststoff eine verbesserte mechanische Stabilität insbesondere eine verbesserte Steifigkeit und Festigkeit auf, da die stoffschlüssige Verbindung zwischen dem Basisbauteil und dem Verbindungsbauteil nicht mit Fasern durchsetzt ist, die die Verbindung schwächen könnten.

Vorzugsweise weist der faserlose thermoplastische Kunststoff ein Polyolefin, insbesondere ein Polypropylen auf. Weiter vorzugsweise weist der faserlose thermoplastische Kunststoff ein Polyamid auf.

Vorzugsweise ist der der faserlose thermoplastische Kunststoff ein duroplastischer Kunststoff. Selbstverständlich kann die Verbindungsbauteil-Innenschicht auch weitere thermoplastische Kunststoffe oder Werkstoffe mit ähnlichen Werkstoffeigenschaften aufweisen.

Besonders bevorzugt weisen die Verbindungsbauteil-Innenschicht und die Verbindungsfläche der Mehrschichtfolie ähnliche oder gleiche Werkstoff-Komponenten und/oder Werkstoff-Eigenschaften auf, sodass diese besonders vorteilhaft stoffschlüssig miteinander gefügt werden können.

Vorzugsweise weist die Verbindungsbauteil-Innenschicht Schichtdicke von kleiner 1000 µm, vorzugsweise kleiner 800 µm, weiter vorzugsweise kleiner 600 µm, weiter vorzugsweise kleiner 400 µm, weiter vorzugsweise kleiner 300 µm, besonders bevorzugt kleiner 200 µm auf.

Vorzugsweise ist die Batteriegehäusekomponente derart ausgebildet, dass das Verbindungsbauteil eine Zentralschicht aufweist, die zwischen der Verbindungsbauteil-Innenschicht und der Verbindungsbauteil-Außenschicht angeordnet ist, wobei die Zentralschicht Fasermaterial aufweist, welches in einer Kunststoffmaterialmatrix angeordnet ist.

Die entsprechend ausgebildete Batteriegehäusekomponente weist eine nochmals verbesserte mechanische Stabilität auf. Ferner weist die entsprechend ausgebildete Batteriegehäusekomponente eine verbesserte Schutzwirkung und eine verbesserte mechanische Stabilität bei thermischer Belastung auf. Eine Zentralschicht aus einem Fasermaterial, insbesondere aus einem endlosfaserverstärktem Fasermaterial, das in einer Kunststoffmatrix angeordnet ist, behält die mechanische Stabilität vorteilhaft im Wesentlichen bei, wenn die Kunststoffmaterialmatrix (z.B. ein oben beschriebener thermoplastischer Kunststoff), in der das Fasermaterial eingebettet ist, aufgrund von Wärmezufuhr aufweicht oder gar verflüssigt wird.

Das Fasermaterial weist vorzugsweise Glasfasern und/oder Aramidfasern und/oder Karbonfasern und/oder weiteren Kunstfasern auf.

Vorzugsweise bilden die Zentralschicht, die Verbindungsbauteil-Außenfläche und die Verbindungsbauteil-Innenfläche ein Cross-Ply, wobei die Zentralschicht sandwichartig zwischen der Verbindungsbauteil-Außenfläche und der Verbindungsbauteil-Innenfläche angeordnet ist. Über die Ausbildung eines Cross-Plys kann dieses mit der Mehrschichtfolie und dem Basisbauteil besonders vorteilhaft zu der erfindungsgemäßen Batteriegehäusekomponente gefügt werden. Ferner weist die erfindungsgemäße Batteriegehäusekomponente durch die sandwichartige Anordnung der Zentralschicht eine kompakte Bauweise auf und ist somit vorteilhaft platzsparend ausgestaltet.

Vorzugsweise ist die Batteriegehäusekomponente derart ausgebildet, dass das Fasermaterial unidirektional verlaufende Fasern aufweist.

Die entsprechend ausgebildete Batteriegehäusekomponente, bei der unidirektional verlaufende Fasern als Fasermaterial der Zentralschicht verwendet werden, weist eine nochmals verbesserte mechanische Stabilität, insbesondere eine verbesserte Stabilität gegenüber Belastungen, die orthogonal zur Verlaufsrichtung der Fasern einwirken.

Die unidirektional verlaufenden Fasern der Zentralschicht sind im Lichte der erfindungsgemäßen Batteriegehäusekomponente Fasern, die komplett oder überwiegend in eine einzige Richtung verlaufen oder orientiert sind. Die Fasern werden dabei als ideal parallel und homogen verteilt angenommen. Die unidirektional verlaufenden Fasern weisen dabei vorteilhaft transversal isotrope Werkstoffeigenschaften auf, wodurch die Zentralschicht eine vorteilhaft vergleichsweise geringe Dichte bei vergleichsweise hoher Festigkeit in einer Belastungsrichtung aufweist.

Vorzugsweise ist die Batteriegehäusekomponente derart ausgebildet, dass das Fasermaterial multidirektional verlaufende Fasern aufweist.

Die entsprechend ausgebildete Batteriegehäusekomponente weist nochmals verbesserte Eigenschaften auf, insbesondere eine vorteilhafte vergleichsweise hohe Steifigkeit, Zugfestigkeit und Vibrationsbeständigkeit bei einem gleichzeitig vergleichsweise geringen Gewicht. Zudem weist die Zentralschicht mit multidirektionalen Fasern vorteilhaft ein verbessertes Delaminations- und Impactverhalten auf.

Die multidirektional verlaufenden Fasern der Zentralschicht sind im Lichte der Erfindung Fasern, die nicht überwiegend unidirektional ausgerichtet sind. Dabei verlaufen die einzelnen Fasern oder Fasergruppen nicht parallel, sondern mit einem Versatzwinkel versetzt zueinander. Dieser Versatzwinkel kann beispielsweise 45°, 60° oder 90° betragen.

Vorzugsweise sind die multidirektionalen Fasern des Fasermaterials der Zentralschicht bei einem Versatzwinkel von 90° schachbrettartig zueinander angeordnet.

Bevorzugt weisen die multidirektionalen Fasern auch weitere Versatzwinkel und/oder eine Kombination mehrere voneinander unterschiedlicher Versatzwinkel zueinander auf.

Die der vorliegenden Erfindung zugrundeliegenden Aufgaben werden ferner durch eine Batteriegehäusekomponente mit den Merkmalen des Anspruchs 7 gelöst. Vorteilhafte Ausgestaltungen sind in den abhängigen Ansprüchen ausgeführt.

Im Genaueren wird die der vorliegenden Erfindung zugrundeliegende Aufgabe gelöst durch eine Batteriegehäusekomponente für eine Traktionsbatterie zur Kühlung von zumindest einer Batteriekomponente, die ein einen ersten Kunststoff aufweisendes Basisbauteil und eine Mehrschichtfolie aufweist, wobei die Mehrschichtfolie eine Verbindungsfläche und eine Kontaktierungsfläche aufweist, wobei die Kontaktierungsfläche zur zumindest mittelbaren Kontaktierung der zumindest einen Batteriekomponente ausgebildet ist. Die Verbindungsfläche der Mehrschichtfolie ist mit einer Basisbauteil-Innenfläche des Basisbauteils unter Ausbildung von zumindest einem zwischen der Mehrschichtfolie und dem Basisbauteil angeordneten Kühlfluidkanal zur Leitung eines Kühlfluids mittels einer Verbindungsschicht aus einem faserlosen thermoplastischen Kunststoff stoffschlüssig verbunden.

Die erfindungsgemäße Batteriegehäusekomponente weist den Vorteil auf, dass der zumindest eine Kühlfluidkanal eine erhöhte Stabilität aufweist, da dieser vergleichsweise größeren Drücken innerhalb des Kühlfluidkanals standhalten kann. Somit ist die Betriebssicherheit einer Traktionsbatterie, mit der die erfindungsgemäße Batteriegehäusekomponente verbaut ist, erhöht.

Die in der Traktionsbatterie verbaute Batteriegehäusekomponente, sowie beispielsweise Batteriezellen und/oder Batteriemodule, sind zudem verbessert gegenüber einem in dem Kühlfluidkanal angeordnetem Kühlfluid geschützt.

Die Batteriegehäusekomponente ist vorzugsweise als Batteriegehäuseschale ausgebildet. Weiter vorzugsweise ist die Batteriekomponente als Unterbodenschutz ausgebildet. Ferner ist es auch möglich, dass die Batteriegehäusekomponente als Batteriegehäusedeckel ausgebildet ist.

Der erste Kunststoff des Basisbauteils ist vorzugsweise ein thermoplastischer Kunststoff. Vorzugsweise weist der erste Kunststoff ein Polyolefin, insbesondere ein Polypropylen auf. Weiter vorzugsweise weist der erste Kunststoff ein Polyamid auf.

Vorzugsweise ist der erste Kunststoff des Basisbauteils ein duroplastischer Kunststoff.

Vorzugsweise ist der erste Kunststoff des Basisbauteils faserverstärkt. Das in aus dem ersten Kunstsoff angeordnete Fasermaterial weist vorzugsweise Glasfasern und/oder Karbonfasern und/oder Aramidfasern auf. Das Fasermaterial weist vorzugsweise Kurzfasern und/oder Langfasern auf.

Die stoffschlüssige Verbindung zwischen der Basisbauteil-Innenfläche und der Verbindungsbauteil-Innenfläche ist vorzugsweise durch eine Verschweißung und/oder Verklebung realisiert, besonders bevorzugt durch ein Heizelementschweißverfahren. Vorzugsweise ist die stoffschlüssige Verbindung zwischen der Basisbauteil-Innenfläche und der Verbindungsbauteil-Innenfläche durch ein Überspritzen (im Spritzgießverfahren) oder ein Überpressen (im Fließpressverfahren) realisiert.

Die Verbindungsschicht, mittels der die Mehrschichtfolie mit der Basisbauteil-Innenfläche stoffschlüssig verbunden ist, weist vorzugsweise ein Polyolefin, weiter vorzugsweise ein Polypropylen auf.

Die Batteriekomponente ist vorzugsweise eine Batteriezelle. Weiter vorzugsweise ist die Batteriekomponente ein Batteriemodul.

Die zumindest eine Batteriekomponente wird vorzugsweise mit der Mehrschichtfolie in direkten, d.h. unmittelbaren Kontakt gebracht.

Vorzugsweise weist die Mehrschichtfolie eine Kontur auf, die zumindest teilweise an eine Geometrie der Batteriekomponenten angepasst ist. Die Batteriegehäusekomponente mit der entsprechend ausgebildeten Mehrschichtfolie ist somit besonders kompakt ausgestaltet.

Ferner ist es auch möglich, dass die zumindest eine Batteriekomponente mit der Mehrschichtfolie mittels einer Wärmeleitpaste in mittelbaren Kontakt gebracht wird. Durch die Wärmeleitpaste wird die von der Batteriekomponente abgegebene Wärme besonders effizient unmittelbar auf die Mehrschichtfolie und mittelbar auf den Kühlfluidkanal übertragen, sodass durch die Wärmeleitpaste die Kühlung der Batteriekomponente besonders vorteilhaft erfolgt.

Da zwischen der Mehrschichtfolie und dem Verbindungsbauteil der zumindest eine Kühlfluidkanal gebildet ist, ist die Verbindungsfläche der Mehrschichtfolie nicht vollflächig sondern abschnittsweise mit der Verbindungsbauteil-Außenfläche des faserverstärkten Verbindungsbauteils stoffschlüssig verbunden.

Vorzugsweise weist die Batteriegehäusekomponente einen Kühlfluidzulauf und einen Kühlfluidablauf auf, die jeweils in den Kühlfluidkanal münden.

Vorzugsweise ist die Batteriegehäusekomponente derart ausgebildet, dass die Mehrschichtfolie eine Isolationsschicht und eine mit dieser verbundenen Strukturschicht aufweist, wobei die Kontaktierungsfläche der Mehrschichtfolie die Isolationsschicht begrenzt.

Die entsprechend ausgebildete Batteriegehäusekomponente weist durch die Isolationsschicht eine verbesserte elektrische Isolation auf, sodass eine Traktionsbatterie, in der die entsprechend ausgebildete Batteriegehäusekomponente verbaut ist, besonders vorteilhaft gegenüber elektrischen Einflüssen geschützt ist. Derartige elektrische Einflüsse können beispielsweise durch punktuelle statische Aufladungen an der Batteriegehäusekomponente oder durch unerwünschte, altersbedingte elektrische Defekte der Batteriekomponente, denen die erfindungsgemäße Batteriegehäusekomponente ausgesetzt ist, hervorgerufen werden. Die Batteriegehäusekomponente ist durch die Isolationsschicht somit besonders betriebssicher ausgestaltet.

Im Lichte der erfindungsgemäßen Batteriegehäusekomponente ist die Isolationsschicht eine Schicht aus einem Kunststoff. Bevorzugt weist die Isolationsschicht einen thermoplastischen Kunststoff auf.

Vorzugsweise weist die Isolationsschicht eine Adhäsionsschicht auf, mittels derer die Isolationsschicht besonders vorteilhaft mit der Strukturschicht verbindbar ist.

Die Isolationsschicht weist eine Schichtdicke von kleiner 100 µm, vorzugsweise kleiner 50 µm, besonders bevorzugt kleiner 20 µm auf.

Im Lichte der erfindungsgemäßen Batteriegehäusekomponente ist die Strukturschicht eine Schicht aus einem metallischen Werkstoff. Bevorzugt weist die Strukturschicht Aluminium, Stahl oder Kupfer auf.

Die Strukturschicht kann auch als Wärmeleitschicht bezeichnet werden. Denn die Strukturschicht dient einer verbesserten Wärmeübertragung auf ein in dem Kühlfluidkanal geleitetes Kühlfluid.

Vorzugsweise weist die Strukturschicht eine Schichtdicke von kleiner 200 µm, vorzugsweise kleiner 100 µm, besonders bevorzugt kleiner 80 µm auf.

Vorzugsweise ist die Batteriegehäusekomponente derart ausgebildet, dass die Mehrschichtfolie eine Fügeschicht aufweist, wobei die Strukturschicht sandwichartig zwischen der Isolationsschicht und der Fügeschicht angeordnet ist und wobei die Verbindungsschicht zumindest teilweise durch die Fügeschicht gebildet ist.

Die entsprechend ausgebildete Batteriegehäusekomponente weist den Vorteil auf, dass die Mehrschichtfolie durch die Fügeschicht besonders vorteilhaft mit der Basisbauteil-Innenfläche oder mit der Verbindungsbauteil-Außenfläche stoffschlüssig verbindbar ist. Ferner ist die entsprechend ausgebildete Batteriegehäusekomponente besonders einfach in deren Herstellung.

Die Fügeschicht weist vorzugsweise einen thermoplastischen Kunststoff auf. Weiter vorzugsweise weist der thermoplastische Kunststoff der Fügeschicht ein Polyolefin, insbesondere ein Polypropylen auf. Weiter vorzugsweise weist der thermoplastische Kunststoff ein Polyamid auf.

Die stoffschlüssige Verbindung zwischen der Fügeschicht und der Basisbauteil-Innenfläche ist dabei vorzugsweise durch eine Verschweißung und/oder Verklebung realisiert, besonders bevorzugt durch ein Heizelementschweißverfahren, wobei die Verbindungsschicht zumindest teilweise durch die Fügeschicht gebildet wird.

Vorzugsweise ist die Batteriegehäusekomponente derart ausgebildet, dass das Basisbauteil an einer Basisbauteil-Außenfläche, die von einer Basisbauteil-Innenfläche abgewandt ist, Verstärkungsrippen aufweist.

Die entsprechend ausgebildete Batteriegehäusekomponente weist eine nochmals verbesserte Steifigkeit und Festigkeit auf, wobei das Gewicht der Batteriegehäusekomponente reduziert ist.

Alternativ oder zusätzlich zu den Verstärkungsrippen können auch Verstärkungswaben an der Basisbauteil-Außenfläche angeordnet sein.

Vorzugsweise sind die Verstärkungsrippen bzw. die Verstärkungswaben in dem Basisbauteil integriert. Weiter vorzugsweise sind die Verstärkungsrippen bzw. die Verstärkungswaben monolithisch mit dem Basisbauteil ausgebildet. Alternativ sind die Verstärkungsrippen bzw. die Verstärkungswaben von außen an der Basisbauteil-Außenseite befestigt.

Die Verstärkungsrippen bzw. die Verstärkungswaben sind vorzugsweise faserverstärkt, vorzugsweise kurzfaserverstärkt und/oder langfaserverstärkt und/oder endlosfaserverstärkt. Weiter vorzugsweise sind die Verstärkungsrippen bzw. die Verstärkungswaben mit der Basisbauteil-Außenfläche verschweißt und/oder verklebt.

Vorzugsweise ist die Batteriegehäusekomponente derart ausgebildet, dass die Batteriegehäusekomponente eine Schutzplatte aufweist, die mit der Basisbauteil-Außenfläche verbunden ist.

Die entsprechend ausgebildete Batteriegehäusekomponente weist eine nochmals verbesserte Steifigkeit auf. Ferner weist die entsprechend ausgebildete Batteriegehäusekomponente den Vorteil auf, dass die Schutzwirkung der Batteriegehäusekomponente gegen eine mechanische Einwirkung durch beispielsweise einen Aufprall erhöht ist. Die Schutzplatte kann bei einer mechanischen Einwirkung, beispielsweise durch einen Aufprall durch ein dynamisches Aufsetzen eines Kraftfahrzeugs auf einen Untergrund, in beispielsweise Hohlräume des Basisbauteils deformieren und dabei entstehende Energie durch den Aufprall in mechanische Deformationsenergie wandeln. Das Basisbauteil wird dabei aufgrund der Deformation der Schutzplatte in die Hohlräume der Batteriegehäusekomponente / des Basisbauteils vor einer Deformation geschützt, so dass sich oberhalb der Schutzplatte befindliche Bauteile des Kraftfahrzeugs wirksam geschützt sind. Dadurch weist die Batteriegehäusekomponente eine erhöhte Schutzwirkung gegenüber mechanischer Einwirkung auf.

Ferner weist die entsprechend ausgebildete Batteriegehäusekomponente aufgrund deren Schichtaufbaus den Vorteil auf, dass diese bei einem Wärmeeintrag eine verminderte Neigung zum Verzug aufweist.

Die Schutzplatte weist vorzugsweise einen Kunststoff und/oder einen metallischen Werkstoff auf.

Die Schutzplatte kann mit dem Basisbauteil vorzugsweise kraftschlüssig und/oder formschlüssig und/oder stoffschlüssig (beispielsweise mittels einer Verschweißung) verbunden sein.

Die Schutzplatte kann mittels Verbindungselementen mit dem Basisbauteil verbunden sein. Verbindungselemente können als Schrauben, Niete oder sonstige Verbindungselemente ausgebildet sein. Beispielsweise kann in die Schutzplatte eine Kavität mit einem Hinterschnitt oder ein Durchgangsloch ausgebildet sein. Das Material des Basisbauteils kann sich in die Kavität erstrecken, so dass auf diese Weise ein Niet gebildet ist. Ferner kann sich das Material des Basisbauteils durch ein Durchgangsloch, dessen Wandung vorzugsweise gefast ausgebildet ist, erstrecken, so dass auf diese Weise ein Niet gebildet ist. Weiter beispielsweise kann die Schutzplatte mit dem Basisbauteil verklebt sein. Weiter beispielsweise kann die Schutzplatte mit dem Basisbauteil verschweißt sein.

Die Batteriegehäusekomponente kann eine Mehrzahl von Schutzplatten aufweisen. Die jeweiligen Schutzplatten sind dabei vorzugsweise nebeneinander angeordnet. Dadurch kann eine erhöhte Flexibilität der Batteriegehäusekomponente erreicht werden.

Vorzugsweise ist die Batteriegehäusekomponente derart ausgebildet, dass die Schutzplatte zumindest eine Kunststofflage und zumindest eine Schutzlage aufweist, die mit der Kunststofflage verbunden ist.

Die entsprechend ausgebildete Batteriegehäusekomponente weist bei einem geringen Gewicht trotzdem einen großen Schutz gegen mechanische Einwirkungen durch beispielsweise einen Aufprall durch ein dynamisches Aufsetzen eines Kraftfahrzeugs auf einen Untergrund auf.

Die Kunststofflage kann thermoplastischen Kunststoff, vorzugsweise Polypropylen oder Polyamid aufweisen. Alternativ kann die Kunststofflage duroplastischen Kunststoff aufweisen.

Die Kunststofflage kann zumindest abschnittweise als faserverstärkte Kunststofflage ausgebildet sein. Dadurch kann die Biegesteifigkeit des Unterbodenschutzes verbessert werden.

Die Kunststofflage kann Langfasern und/oder Endlosfasern aufweisen. Dadurch kann die Biegesteifigkeit des Unterbodenschutzes nochmals verbessert werden.

Die Fasern der Kunststofflage können als Glasfasern und/oder Karbonfasern und/oder Aramidfasern ausgebildet sein.

Die Schutzlage kann beispielweise als Organoblech ausgebildet sein. Unter Organoblechen sind Faser-Matrix-Halbzeuge zu verstehen. Diese bestehen aus einem Fasergewebe oder einem Fasergelege, die in eine thermoplastische Kunststoffmatrix eingebettet sind. Dadurch kann die Warmumformbarkeit verbessert werden und dadurch die Fertigungszeiten verkürzt werden. Zudem kann die Biegesteifigkeit der Batteriegehäusekomponente verbessert werden.

Die Schutzlage kann beispielsweise auch als Metallschicht bzw. Metalllage ausgebildet sein. Beispielsweise kann die Metallschicht als Stahlschicht bzw. Stahlplatte ausgebildet sein.

Die der vorliegenden Erfindung zugrundeliegende Aufgabe wird ferner durch ein Traktionsbatteriegehäuse zur Aufnahme von zumindest einer Batteriekomponente in einem Aufnahmevolumen des Traktionsbatteriegehäuses gelöst, wobei das Traktionsbatteriegehäuse eine oben beschriebene Batteriegehäusekomponente aufweist.

Ferner wird die der Erfindung zugrundeliegende Aufgabe durch eine Traktionsbatterie für ein Kraftfahrzeug gelöst, wobei die Traktionsbatterie ein oben beschriebenes Traktionsbatteriegehäuse und zumindest eine Batteriekomponente aufweist, die im Aufnahmevolumen des Traktionsbatteriegehäuses angeordnet ist und mit der Kontaktierungsfläche der Mehrschichtfolie in zumindest mittelbarem Kontakt steht.

Ferner wird die der vorliegenden Erfindung zugrundeliegende Aufgabe durch ein Kraftfahrzeug, insbesondere ein Elektrokraftfahrzeug mit einer oben beschriebenen Traktionsbatterie gelöst.

Ferner wird die der vorliegenden Erfindung zugrundeliegende Aufgabe jeweils durch eine Verfahren zum Herstellen einer Batteriegehäusekomponente mit den Merkmalen des Anspruchs 15 oder des Anspruchs 16 oder des Anspruchs 17 des Anspruchs 18 gelöst.

Vorzugsweise bedeckt die Verbindungsschicht nicht durchgängig das Basisbauteil, sondern ist in den Bereichen des Basisbauteils angeordnet, wo die Mehrschichtfolie mit dem Basisbauteil mittels der Verbindungsschicht verbunden wird.

Weitere Vorteile, Einzelheiten und Merkmale der Erfindung ergeben sich nachfolgend aus den erläuterten Ausführungsbeispielen. Dabei zeigen im Einzelnen:
- Figur 1A:: eine perspektivische Schnittdarstellung einer erfindungsgemäßen Traktionsbatterie, die ein erfindungsgemäßes Traktionsbatteriegehäuse mit einer erfindungsgemäßen Batteriegehäusekomponente aufweist;
- Figur 1B:: eine Perspektivische Schnittdarstellung eines Teilausschnitts A der in Figur 1A dargestellten Traktionsbatterie;
- Figur 2:: eine schematische Querschnittsdarstellung einer Mehrschichtfolie einer erfindungsgemäßen Batteriegehäusekomponente;
- Figur 3:: eine schematische Querschnittsdarstellung einer eines faserverstärkten Verbindungsbauteils einer erfindungsgemäßen Batteriegehäusekomponente;
- Figur 4:: eine schematische Querschnittsdarstellung einer erfindungsgemäßen Batteriegehäusekomponente gemäß einer ersten Ausführungsform der vorliegenden Erfindung;
- Figur 5:: eine schematische Querschnittsdarstellung einer erfindungsgemäßen Batteriegehäusekomponente gemäß einer zweiten Ausführungsform der vorliegenden Erfindung;
- Figur 6:: eine schematische Querschnittsdarstellung einer erfindungsgemäßen Batteriegehäusekomponente gemäß einer dritten Ausführungsform der vorliegenden Erfindung; und
- Figur 7:: eine schematische Querschnittsdarstellung einer erfindungsgemäßen Batteriegehäusekomponente gemäß einer vierten Ausführungsform der vorliegenden Erfindung.

In der folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die weiteren Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

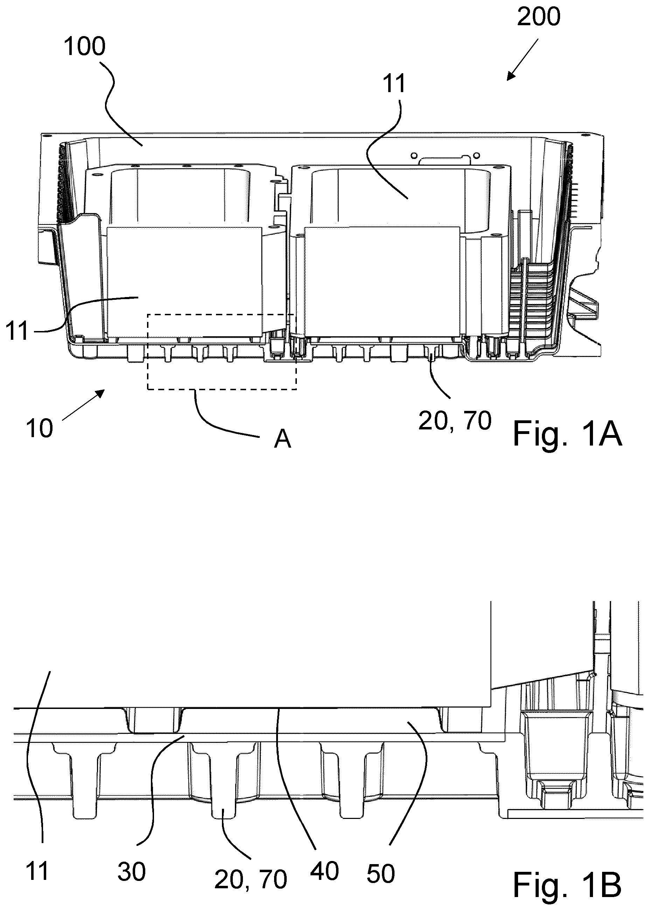

Figur 1A zeigt eine Traktionsbatterie 200, welche ein Traktionsbatteriegehäuse 100 aufweist, in dem zwei jeweils als Batteriemodul 11 ausgebildete Batteriekomponenten 11 in einem Aufnahmevolumen des Traktionsbatteriegehäuses 100 aufgenommen sind. Das Traktionsbatteriegehäuse 100 ist dabei wannenartig ausgestaltet, sodass die beiden Batteriekomponenten 11 in einem Bodenbereich des Traktionsbatteriegehäuses 100 angeordnet sind, wobei die beiden Batteriekomponenten 11 in dem Bodenbereich mit einer Batteriegehäusekomponente 10 des Traktionsbatteriegehäuses 100 über eine vergleichsweise große Fläche kontaktierend angeordnet sind. Über diese vergleichsweise große Fläche ist ein Wärmeaustausch zwischen den Batteriekomponenten 11 und der Batteriegehäusekomponente 10 ermöglicht. Insbesondere während eines Lade- und/oder Entladevorgangs der Batteriekomponenten 11 entsteht Wärme, die so an die Batteriegehäusekomponente 10 abgegeben und von dieser abgeführt werden kann.

Die Batteriegehäusekomponente 10 verfügt in der dargestellten Ausführungsform über mehrere Verstärkungsrippen 70, wodurch die Batteriegehäusekomponente 10 bzw. das Traktionsbatteriegehäuse 100 besonders stabil ausgestaltet ist. Ferner wird ein Teilausschnitt A dargestellt, welcher auf einen Kontaktbereich der linken der beiden Batteriekomponenten 11 mit der Batteriegehäusekomponente 10 gerichtet ist.

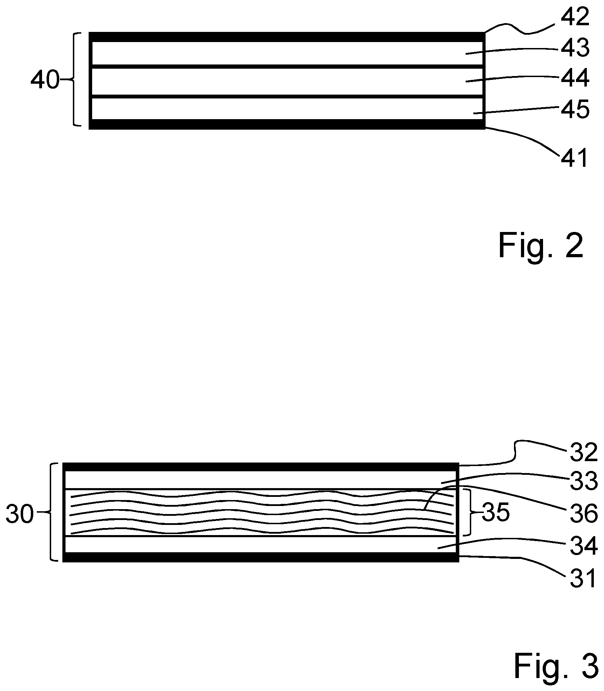

Figur 1B zeigt den Teilausschnitt A des Batteriegehäuses 10 mit einer Mehrschichtfolie 40, wobei die Mehrschichtfolie 40 einerseits über eine in den Figuren 2, 4 bis 7 dargestellte Kontaktierungsfläche 42 mit der Batteriekomponente 11 und andererseits über eine in den Figuren 2, 4 bis 7 dargestellte Verbindungsfläche 41 mit einem als Verbindungsplatte 30 ausgestalteten faserverstärkten Verbindungsbauteil 30 verbunden ist.

Zwischen der Mehrschichtfolie 40 und dem faserverstärkten Verbindungsbauteil 30 ist ein Kühlfluidkanal 50 zur Leitung eines Kühlfluids ausgebildet. Somit ist mittels eines durch den Kühlfluidkanal 50 strömendes Kühlfluid von der Batteriekomponente 11 erzeugte Wärme, die über die Kontaktierungsfläche 42, die zwischen der Batteriekomponente 11 und der Mehrschichtfolie 40 ausgebildet ist, abführbar.

Das Verbindungsbauteil 30 ist sandwichartig zwischen dem Basisbauteil 20 und der Mehrschichtfolie 40 angeordnet und einerseits mit der Mehrschichtfolie 40 und andererseits mit einem Basisbauteil 20 jeweils stoffschlüssig verbunden. Das Basisbauteil 20 weist in dem Teilausschnitt A zudem Verstärkungsrippen 70 auf, welche der Batteriegehäusekomponente 10 eine erhöhte Stabilität verleihen. Weiterhin wird die Batteriekomponente 11 über eine unlösbare Verbindung, beispielsweise eine Fügeverbindung, mit dem Verbindungsbauteil 30 und somit mit der Batteriegehäusekomponente 10 verbunden.

Figur 2 zeigt eine mögliche Ausführung der Mehrschichtfolie 40, die an deren Verbindungsfläche 41 mit dem Verbindungsbauteil 30 verbindbar und über deren Kontaktierungsfläche 42 mit der Batteriekomponente 11 kontaktierbar ist. Zwischen der Verbindungsfläche 41 und der Kontaktierungsfläche 42 weist die Mehrschichtfolie 40 eine Isolationsschicht 43, eine Strukturschicht 44 und eine Fügeschicht 45 auf. Die Kontaktierungsfläche 42 begrenzt die Isolationsschicht 43, und die Isolationsschicht 43 kann beispielsweise einen thermoplastischen Kunststoff und eine Schichtdicke zwischen 20 µm und 100 µm aufweisen.

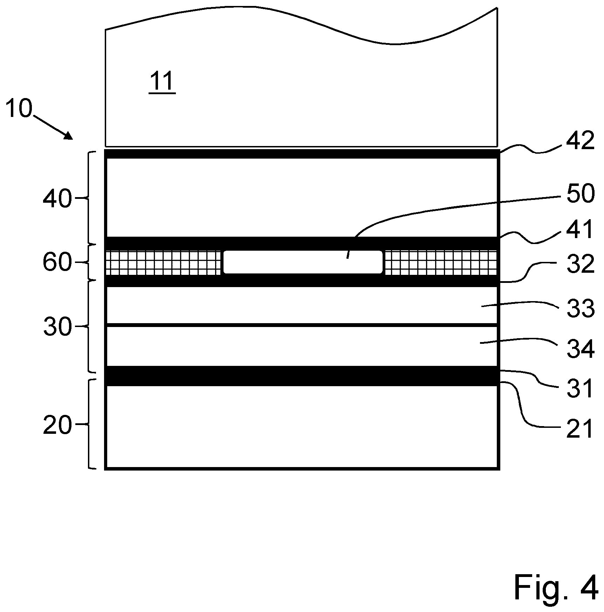

Die Verbindungsfläche 41 begrenzt die Fügeschicht 45, wobei mittels der Verbindungsfläche 41 die Mehrschichtfolie 40 vorzugsweise mittels einer Verschweißung und/oder Verklebung mit dem Basisbauteil 20 verbunden ist. Die Fügeschicht 45 kann beispielsweise einen faserlosen thermoplastischen Kunststoff aufweisen und teilweise durch eine in den Figuren 4 bis 7 dargestellte Verbindungsschicht 60 gebildet werden.

Zwischen der Isolationsschicht 43 und der Fügeschicht 45 ist die Strukturschicht 44 angeordnet, die als eine Schicht aus einem metallischen Werkstoff, beispielsweise Aluminium, ausgebildet ist. Die Strukturschicht 44 fungiert dabei auch als Wärmeleitschicht und dient einer verbesserten Wärmeübertragung auf ein in dem Kühlfluidkanal 50 geleitetes Kühlfluid.

Figur 3 zeigt ein faserverstärktes Verbindungsbauteil 30 einer erfindungsgemäßen Batteriegehäusekomponente 10 mit einer Verbindungsbauteil-Außenschicht 33, einer Zentralschicht 35 und einer Verbindungsbauteil-Innenschicht 34. Dabei ist das Verbindungsbauteil 30 über eine Verbindungsbauteil-Innenfläche 31 der Verbindungsbauteil-Innenschicht 34 mit dem Basisbauteil 20 und über eine Verbindungsbauteil-Außenfläche 32 der Verbindungsbauteil-Außenschicht 33 mit der Mehrschichtfolie 40 jeweils stoffschlüssig verbunden.

Die Zentralschicht 35, die Verbindungsbauteil-Außenfläche 32 und die Verbindungsbauteil-Innenfläche 31 bilden ein Cross-Ply 30 oder ein Organoblech 30, wobei die Zentralschicht 35 sandwichartig zwischen der Verbindungsbauteil-Außenfläche 32 und der Verbindungsbauteil-Innenfläche 31 angeordnet ist. Die Zentralschicht 35 weist ein Fasermaterial 36 mit unidirektional oder multidirektional verlaufenden Fasern auf, welches in einer Kunststoffmaterialmatrix angeordnet ist. Alternativ kann die Zentralschicht 35 auch ein endlosfaserverstärktes Band, auch unidirektionales Tape oder UD-Tape genannt, aufweisen. Das derartige Fasermaterial 36 kann beispielsweise Glasfasern und/oder Aramidfasern und/oder Karbonfasern und/oder weiteren Kunstfasern aufweisen.

Die Verbindungsbauteil-Außenschicht 33 und die Verbindungsbauteil-Innenschicht 34 können beispielsweise überwiegend ein Polypropylen aufweisen und somit besonders einfach mit der Mehrschichtfolie 40 bzw. dem Basisbauteil 20 verbunden werden.

Fig. 4 zeigt die Batteriegehäusekomponente 10 für eine Traktionsbatterie 200 zur Kühlung von zumindest einer Batteriekomponente 11, wobei die Batteriegehäusekomponente 10 das Basisbauteil 20, das faserverstärktes Verbindungsbauteil 30 und die Mehrschichtfolie 40 aufweist. Die Batteriekomponente 11 ist an der Kontaktierungsfläche 42 der Mehrschichtfolie 40 angeordnet, sodass eine Wärmeübertragung zwischen der Batteriekomponente 11 und der Batteriegehäusekomponente 10 ermöglicht ist.

Aus Figur 4 ist ersichtlich, dass das faserverstärkte Verbindungsbauteil 30 sandwichartig zwischen dem Basisbauteil 20 und der Mehrschichtfolie 40 angeordnet ist. Dabei ist die Basisbauteil-Innenfläche 21 mit der Verbindungsbauteil-Innenfläche 31 stoffschlüssig verbunden. Die Verbindungsfläche 41 der Mehrschichtfolie 40 ist mit der Verbindungsbauteil-Außenfläche 32 des faserverstärkten Verbindungsbauteils 30 unter Ausbildung von zumindest einem zwischen der Mehrschichtfolie 40 und dem Verbindungsbauteil 30 angeordneten Kühlfluidkanal 50 zur Leitung eines Kühlfluids mittels der Verbindungsschicht 60 aus einem faserlosen thermoplastischen Kunststoff stoffschlüssig verbunden.

Die von der Batteriekomponente 11 abgegebene Wärme ist mittels der Mehrschichtfolie 40 an ein Kühlfluid, beispielsweise Wasser, ableitbar, wobei das Kühlfluid durch den Kühlfluidkanal 50 strömt. Durch das Ableiten wird ein Aufstauen der Wärme im Bereich der Batteriekomponente 11 verhindert, da eine Kühlung der Batteriekomponente 11 durch das in dem Kühlfluidkanal 50 angeordnete Kühlfluid erfolgt.

Der Kühlfluidkanal 50 ist mittig zwischen der Mehrschichtfolie 40 und dem Verbindungsbauteil 30 angeordnet, sodass die Verbindungsschicht 60 insbesondere an den kurzen Seiten des Kühlfluidkanals 50 angeordnet ist.

In der gezeigten Ausführungsform ist ein Kühlfluidkanal 50 dargestellt, selbstverständlich kann auch eine Mehrzahl von Kühlfluidkanälen 50 zur Kühlung von Batteriekomponenten in der Batteriegehäusekomponente 10 angeordnet sein.

Bei der in Figur 4 dargestellten Ausführungsform weist das Verbindungsbauteil 30 die Verbindungsbauteil-Außenschicht 33 auf, die aus einem faserlosen thermoplastischen Kunststoff besteht und von der Verbindungsbauteil-Außenfläche 32 begrenzt ist, wobei die Verbindungsschicht 60 zumindest teilweise durch die Verbindungsbauteil-Außenschicht 33 gebildet ist.

Ferner weist das Verbindungsbauteil 30 die Verbindungsbauteil-Innenschicht 34 auf, die aus einem faserlosen thermoplastischen Kunststoff besteht und von der Verbindungsbauteil-Innenfläche 31 begrenzt ist, wobei das Basisbauteil 20 mit dem faserverstärkten Verbindungsteil 30 mittels der Verbindungsbauteil-Innenschicht 34 stoffschlüssig verbunden ist. Ferner können das faserverstärkte Verbindungsbauteil 30 und/oder die Mehrschichtfolie 40 der Batteriegehäusekomponente 10 gemäß der ersten Ausführungsform auch Merkmale der mit Bezug auf die Figuren 2 und 3 beschriebenen Mehrschichtfolie 40 und dem Verbindungsbauteil 30 aufweisen.

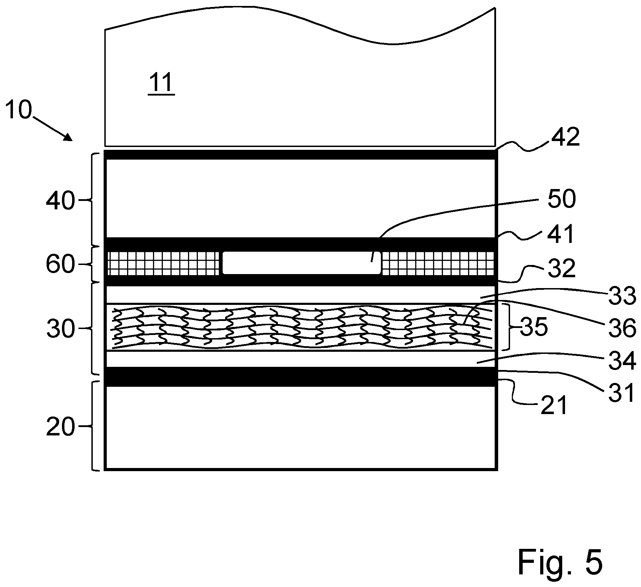

Figur 5 zeigt eine Ausführungsform der Batteriegehäusekomponente 10 gemäß einer zweiten Ausführungsform, die sich durch eine Ausgestaltung des faserverstärkten Verbindungsbauteil 30 auszeichnet. Dieses weist nunmehr die Zentralschicht 35 auf, die sandwichartig zwischen der Verbindungsbauteil-Außenschicht 33 und der Verbindungsbauteil-Innenschicht 34 angeordnet ist. Die Zentralschicht weist zudem das Fasermaterial 36 auf, das in der dargestellten Ausführungsform multidirektional verlaufende Fasern aufweist. Die derart ausgestaltete Batteriegehäusekomponente 10 ist durch die Zentralschicht 35 besonders stabil ausgestaltet, sodass die Batteriegehäusekomponente 10 vorteilhaft robust gegenüber Belastungen und Beanspruchungen ist. Der übrige Aufbau der Batteriegehäusekomponente 10 gemäß der zweiten Ausführungsform entspricht dem der Batteriegehäusekomponente 10 gemäß der ersten Ausführungsform, so dass zwecks Vermeidung von Wiederholungen auf die obigen Ausführungen verwiesen wird.

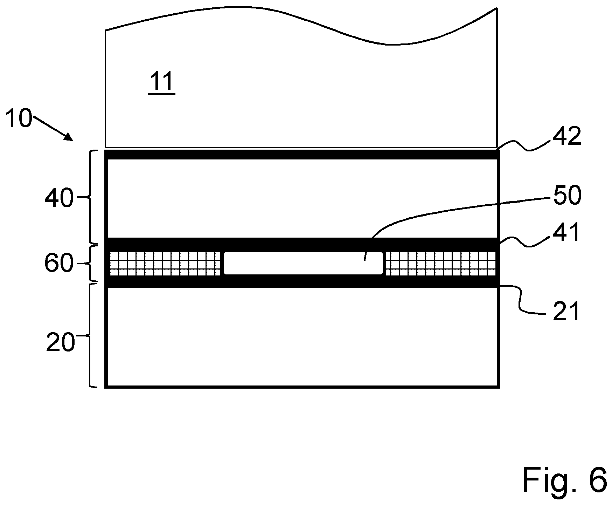

Figur 6 zeigt eine dritte Ausführungsform der Batteriegehäusekomponente 10, welche nunmehr kein faserverstärktes Verbindungsbauteil 30 aufweist, sodass der Kühlfluidkanal 50 direkt zwischen der Verbindungsfläche 41 der Mehrschichtfolie 40 und der Basisbauteil-Innenfläche 21 mittels der Verbindungsschicht 60 angeordnet ist. Bei der in Figur 6 dargestellten Batteriegehäusekomponente 10 ist die Verbindungsfläche 41 der Mehrschichtfolie 40 mit der Basisbauteil-Innenfläche 21 des Basisbauteils 20 unter Ausbildung von zumindest einem zwischen der Mehrschichtfolie 40 und dem Basisbauteil 20 angeordneten Kühlfluidkanal 50 zur Leitung eines Kühlfluids mittels einer Verbindungsschicht 60 aus einem faserlosen thermoplastischen Kunststoff stoffschlüssig verbunden. Der übrige Aufbau der Batteriegehäusekomponente 10 gemäß der dritten Ausführungsform entspricht dem der Batteriegehäusekomponente 10 gemäß der ersten Ausführungsform, so dass zwecks Vermeidung von Wiederholungen auf die obigen Ausführungen verwiesen wird.

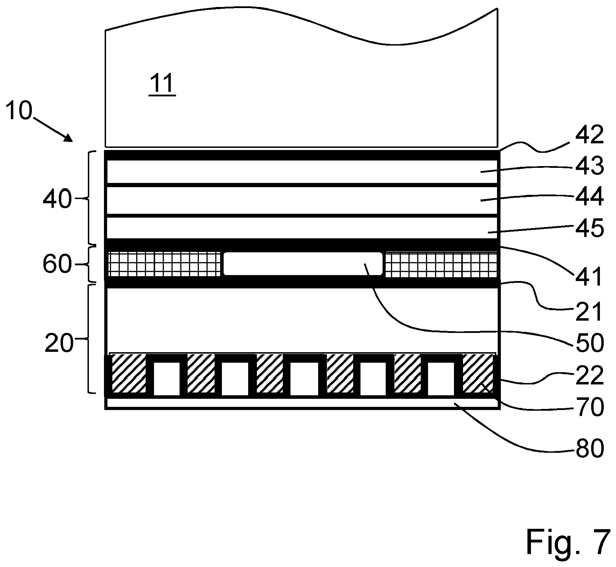

Figur 7 zeigt eine Batteriegehäusekomponente 10 gemäß einer vierten Ausführungsform. Bei der in Figur 7 dargestellten Batteriegehäusekomponente 10 weist die Mehrschichtfolie 40 zwischen der Verbindungsfläche 41 und der Kontaktfläche 42 die Fügeschicht 45, die Strukturschicht 44 und die Isolationsschicht 43 auf, wobei die Strukturschicht 44 sandwichartig zwischen der Isolationsschicht 43 und der Fügeschicht 45 angeordnet ist. Dabei begrenzt die die Kontaktierungsfläche 42 der Mehrschichtfolie 40 die Isolationsschicht 43, und die Verbindungsfläche 41 der Mehrschichtfolie 40 begrenzt die Fügeschicht 45. Die Verbindungsschicht 60 ist zumindest teilweise durch die Fügeschicht 45 gebildet. Die Fügeschicht 45 bewirkt folglich, dass die Mehrschichtfolie 40 besonders vorteilhaft mit der Basisbauteil-Innenfläche 21 gefügt werden kann.

Die Batteriegehäusekomponente 10 gemäß der vierten Ausführungsform ist derart ausgestaltet, dass das Basisbauteil 20 an deren Basisbauteil-Außenfläche 22 Verstärkungsrippen 70 aufweist, wodurch die entsprechend ausgebildete Batteriegehäusekomponente 10 eine erhöhte Steifigkeit und Festigkeit aufweist. Die Verstärkungsrippen 70 sind in der dargestellten Ausführungsform monolithisch mit dem Basisbauteil 20 ausgebildet.

Die Batteriegehäusekomponente 10 gemäß der vierten Ausführungsform weist ferner eine Schutzplatte 80 auf, die mit der Basisbauteil-Außenfläche 22 verbunden ist. Die Schutzplatte 80 kann dabei eine Kunststofflage aus einem thermoplastischen Kunststoff aufweisen, zumindest abschnittsweise als faserverstärkte Kunststofflage ausgebildet sein sowie Langfasern und/oder Endlosfasern aufweisen. Ferner kann die Schutzplatte 80 als eine Metallplatte ausgebildet sein und/oder ein Organoblech aufweisen. Die Schutzplatte 80 kann darüber hinaus mit dem Basisbauteil 20 verklebt oder verschweißt sein.

Der übrige Aufbau der Batteriegehäusekomponente 10 gemäß der vierten Ausführungsform entspricht dem der Batteriegehäusekomponente 10 gemäß der ersten Ausführungsform, so dass zwecks Vermeidung von Wiederholungen auf die obigen Ausführungen verwiesen wird.

Die jeweiligen Merkmale der Batteriegehäusekomponenten 10 gemäß der ersten bis vierten Ausführungsformen können auch miteinander kombiniert werden. So kann beispielsweise die Schutzplatte 80 auch an den jeweiligen Basisbauteil-Außenflächen 22 der Batteriegehäusekomponenten 10 gemäß der ersten bis dritten Ausführungsformen befestigt sein.

### Bezugszeichenliste

- 10: Batteriegehäusekomponente
- 11: Batteriekomponente
- 20: Basisbauteil
- 21: Basisbauteil-Innenfläche
- 22: Basisbauteil-Außenfläche
- 30: faserverstärktes Verbindungsbauteil
- 31: Verbindungsbauteil-Innenfläche
- 32: Verbindungsbauteil-Außenfläche
- 33: Verbindungsbauteil-Außenschicht
- 34: Verbindungsbauteil-Innenschicht
- 35: Zentralschicht
- 36: Fasermaterial
- 40: Mehrschichtfolie
- 41: Verbindungsfläche
- 42: Kontaktierungsfläche
- 43: Isolationsschicht
- 44: Strukturschicht
- 45: Fügeschicht
- 50: Kühlfluidkanal
- 60: Verbindungsschicht
- 70: Verstärkungsrippen
- 80: Schutzplatte
- 100: Traktionsbatteriegehäuse
- 200: Traktionsbatterie
- A: Teilausschnitt des Batteriegehäuses

## Patentansprüche

1. Batteriegehäusekomponente (10) für eine Traktionsbatterie (200) zur Kühlung von zumindest einer Batteriekomponente (11), wobei die Batteriegehäusekomponente (10) folgende Merkmale aufweist:
- die Batteriegehäusekomponente (10) weist ein Basisbauteil (20) auf, welches einen ersten Kunststoff aufweist;
- die Batteriegehäusekomponente (10) weist ein faserverstärktes Verbindungsbauteil (30) auf, welches eine Verbindungsbauteil-Innenfläche (31) und eine Verbindungsbauteil-Außenfläche (32) aufweist;
- die Batteriegehäusekomponente (10) weist eine Mehrschichtfolie (40) auf, wobei die Mehrschichtfolie (40) eine Verbindungsfläche (41) und eine Kontaktierungsfläche (42) aufweist, wobei die Kontaktierungsfläche (42) zur zumindest mittelbaren Kontaktierung der zumindest einen Batteriekomponente (11) ausgebildet ist;
- das faserverstärkte Verbindungsbauteil (30) ist sandwichartig zwischen dem Basisbauteil (20) und der Mehrschichtfolie (40) angeordnet; und
- eine Basisbauteil-Innenfläche (21) des Basisbauteils (20) ist mit der Verbindungsbauteil-Innenfläche (31) stoffschlüssig verbunden;
wobei die Batteriegehäusekomponente (10) **dadurch gekennzeichnet ist, dass**
- die Verbindungsfläche (41) der Mehrschichtfolie (40) mit der Verbindungsbauteil-Außenfläche (32) des faserverstärkten Verbindungsbauteils (30) unter Ausbildung von zumindest einem zwischen der Mehrschichtfolie (40) und dem Verbindungsbauteil (30) angeordneten Kühlfluidkanal (50) zur Leitung eines Kühlfluids mittels einer Verbindungsschicht (60) aus einem faserlosen thermoplastischen Kunststoff stoffschlüssig verbunden ist.

2. Batteriegehäusekomponente (10) nach Anspruch 1, **gekennzeichnet durch** die folgenden Merkmale:
- das Verbindungsbauteil (30) weist eine Verbindungsbauteil-Außenschicht (33) auf, die aus einem faserlosen thermoplastischen Kunststoff besteht und von der Verbindungsbauteil-Außenfläche (32) begrenzt ist; und
- die Verbindungsschicht (60) ist zumindest teilweise durch die Verbindungsbauteil-Außenschicht (33) gebildet.

3. Batteriegehäusekomponente (10) nach einem der vorhergehenden Ansprüche, **gekennzeichnet durch** die folgenden Merkmale:
- das Verbindungsbauteil (30) weist eine Verbindungsbauteil-Innenschicht (34) auf, die aus einem faserlosen thermoplastischen Kunststoff besteht und von der Verbindungsbauteil-Innenfläche (31) begrenzt ist; und
- das Basisbauteil (20) ist mit dem faserverstärkten Verbindungsteil (30) mittels der Verbindungsbauteil-Innenschicht (34) stoffschlüssig verbunden.

4. Batteriegehäusekomponente (10) nach Anspruch 3, **gekennzeichnet durch** die folgenden Merkmale:
- das Verbindungsbauteil (30) weist eine Zentralschicht (35) auf, die zwischen der Verbindungsbauteil-Innenschicht (34) und der Verbindungsbauteil-Außenschicht (33) angeordnet ist; und
- die Zentralschicht (35) weist Fasermaterial (36) auf, welches in einer Kunststoffmaterialmatrix angeordnet ist.

5. Batteriegehäusekomponente (10) nach Anspruch 4, **dadurch gekennzeichnet, dass** das Fasermaterial (36) unidirektional verlaufende Fasern aufweist.

6. Batteriegehäusekomponente (10) nach Anspruch 4, **dadurch gekennzeichnet, dass** das Fasermaterial (36) multidirektional verlaufende Fasern aufweist.

7. Batteriegehäusekomponente (10) für eine Traktionsbatterie zur Kühlung von zumindest einer Batteriekomponente (11), wobei die Batteriegehäusekomponente (10) folgende Merkmale aufweist:
- die Batteriegehäusekomponente (10) weist ein Basisbauteil (20) auf, welches einen ersten Kunststoff aufweist;
- die Batteriegehäusekomponente (10) weist eine Mehrschichtfolie (40) auf, wobei die Mehrschichtfolie (40) eine Verbindungsfläche (41) und eine Kontaktierungsfläche (42) aufweist, wobei die Kontaktierungsfläche (42) zur zumindest mittelbaren Kontaktierung der zumindest einen Batteriekomponente (11) ausgebildet ist;
wobei die Batteriegehäusekomponente (10) **dadurch gekennzeichnet ist, dass**
- die Verbindungsfläche (41) der Mehrschichtfolie (40) mit einer Basisbauteil-Innenfläche (21) des Basisbauteils (20) unter Ausbildung von zumindest einem zwischen der Mehrschichtfolie (40) und dem Basisbauteil (20) angeordneten Kühlfluidkanal (50) zur Leitung eines Kühlfluids mittels einer Verbindungsschicht (60) aus einem faserlosen thermoplastischen Kunststoff stoffschlüssig verbunden ist.

8. Batteriegehäusekomponente (10) nach einem der vorhergehenden Ansprüche, **gekennzeichnet durch** die folgenden Merkmale:
- die Mehrschichtfolie (40) weist eine Isolationsschicht (43) und eine mit dieser verbundenen Strukturschicht (44) auf; und
- die Kontaktierungsfläche (42) der Mehrschichtfolie (40) begrenzt die Isolationsschicht (43).

9. Batteriegehäusekomponente (10) nach Anspruch 8, **gekennzeichnet durch** die folgenden Merkmale:
- die Mehrschichtfolie (40) weist eine Fügeschicht (45) auf;
- die Strukturschicht (44) ist sandwichartig zwischen der Isolationsschicht (43) und der Fügeschicht (45) angeordnet; und
- die Verbindungsschicht (60) ist zumindest teilweise durch die Fügeschicht (45) gebildet.

10. Batteriegehäusekomponente (10) nach einem der vorhergehenden Ansprüche, **dadurch gekennzeichnet, dass** das Basisbauteil (20) an einer Basisbauteil-Außenfläche (22), die von einer Basisbauteil-Innenfläche (21) abgewandt ist, Verstärkungsrippen (70) aufweist.

11. Batteriegehäusekomponente (10) nach einer der vorhergehenden Ansprüche, **dadurch gekennzeichnet, dass** die Batteriegehäusekomponente (10) eine Schutzplatte (80) aufweist, die mit der Basisbauteil-Außenfläche (22) verbunden ist.

12. Traktionsbatteriegehäuse (100) zur Aufnahme von zumindest einer Batteriekomponente (11) in einem Aufnahmevolumen des Traktionsbatteriegehäuses (100), aufweisend eine Batteriegehäusekomponente (10) nach einem der vorhergehenden Ansprüche.

13. Traktionsbatterie für ein Kraftfahrzeug, aufweisend ein Traktionsbatteriegehäuse (100) nach Anspruch 12 und zumindest einer Batteriekomponente (10), die im Aufnahmevolumen des Traktionsbatteriegehäuses (100) angeordnet ist und mit der Kontaktierungsfläche (42) der Mehrschichtfolie (40) in zumindest mittelbarem Kontakt steht.

14. Kraftfahrzeug mit einer Traktionsbatterie nach Anspruch 13.

15. Verfahren zum Herstellen einer Batteriegehäusekomponente (10) mit den Merkmalen des Anspruchs 1, wobei das Verfahren folgende Verfahrensschritte aufweist:
- Bereitstellen eine Spritzgusswerkzeugs, welches zwischen einer Offenstellung und einer Schließstellung verstellbar ist, und welches eine Kavität aufweist;
- Einlegen eines faserverstärkten Verbindungsbauteils (30) in die Kavität des sich in der Offenstellung befindlichen Spritzgießwerkzeugs;
- Schließen des Spritzgießwerkzeugs;
- Injizieren eines ersten Kunststoffs in die Kavität des Spritzgießwerkzeugs, so dass die Verbindungsbauteil-Innenfläche (31) mit dem ersten Kunststoff in direkten Kontakt kommt und mit dem ersten Kunststoff stoffschlüssig verbunden wird;
- Öffnen des Spritzgießwerkzeugs und Herausnehmen des Basisbauteils (20) und des mit diesen stoffschlüssig verbundenen faserverstärkten Verbindungsbauteils (30);
- Positionieren der Mehrschichtfolie (40) auf dem Verbindungsbauteil (30) derart, dass die Verbindungsfläche (41) der Mehrschichtfolie (40) mit der Verbindungsbauteil-Außenfläche (32) des faserverstärkten Verbindungsbauteils (30) in Kontakt kommt; und
- stoffschlüssiges Verbinden der Verbindungsfläche (41) der Mehrschichtfolie (40) mit der Verbindungsbauteil-Außenfläche (32) unter Ausbildung von zumindest einem zwischen der Mehrschichtfolie (40) und dem Verbindungsbauteil (30) angeordneten Kühlfluidkanal (50) zur Leitung eines Kühlfluids.

16. Verfahren zum Herstellen einer Batteriegehäusekomponente (10) mit den Merkmalen des Anspruchs 1, wobei das Verfahren folgende Verfahrensschritte aufweist:
- Bereitstellen eine Fließpresswerkzeugs, welches eine Matrize mit einer Aufnahmeeinrichtung und einen Stempel aufweist;
- Einlegen eines faserverstärkten Verbindungsbauteils (30) in die Aufnahmeeinrichtung der Matrize derart, dass die Verbindungsbauteil-Innenfläche (31) frei zugänglich ist;
- Positionieren von zumindest einem aus dem ersten Kunststoff bestehenden Plastifikat auf der Verbindungsbauteil-Innenfläche (31);
- Verformen des zumindest einen Plastifikats mittels des Stempels, so dass das zumindest eine Plastifikat mit der gesamten Verbindungsbauteil-Innenfläche (31) in Kontakt kommt und die Verbindungsbauteil-Innenfläche (31) mit dem ersten Kunststoff stoffschlüssig verbunden wird;
- Herausnehmen des Basisbauteils (20) und des mit diesen stoffschlüssig verbundenen faserverstärkten Verbindungsbauteils (30);
- Positionieren der Mehrschichtfolie (40) auf dem Verbindungsbauteil (30) derart, dass die Verbindungsfläche (41) der Mehrschichtfolie (40) mit der Verbindungsbauteil-Außenfläche (32) des faserverstärkten Verbindungsbauteils (30) in Kontakt kommt; und
- stoffschlüssiges Verbinden der Verbindungsfläche (41) der Mehrschichtfolie (40) mit der Verbindungsbauteil-Außenfläche (32) unter Ausbildung von zumindest einem zwischen der Mehrschichtfolie (40) und dem Verbindungsbauteil (30) angeordneten Kühlfluidkanal (50) zur Leitung eines Kühlfluids.

17. Verfahren zum Herstellen einer Batteriegehäusekomponente (10) mit den Merkmalen des Anspruchs 7, wobei das Verfahren folgende Verfahrensschritte aufweist:
- Bereitstellen eines Spritzgusswerkzeugs, welches zwischen einer Offenstellung und einer Schließstellung verstellbar ist, und welches einen Schieber aufweist, so dass in einer ersten Stellung des Schiebers eine erste Kavität im Spritzgießwerkzeug in dessen Schließstellung gebildet ist, und in einer zweiten Stellung des Schiebers eine zweite Kavität im Spritzgießwerkzeug in dessen Schließstellung gebildet ist;
- Überführen des Spritzgießwerkzeugs in dessen Schließstellung und Überführen des Schiebers in dessen erste Position;
- Injizieren eines faserlosen thermoplastischen Kunststoffs in die erste Kavität unter Ausbildung der Verbindungsschicht (60);
- Überführen des Schiebers in dessen zweite Position;
- Injizieren eines ersten Kunststoffs in die zweite Kavität des Spritzgießwerkzeugs, so dass die Verbindungsschicht (60) mit dem ersten Kunststoff in direkten Kontakt kommt und mit dem ersten Kunststoff stoffschlüssig verbunden wird;
- Öffnen des Spritzgießwerkzeugs und Herausnehmen des Basisbauteils (20) und der mit diesem stoffschlüssig verbundenen Verbindungsschicht (60);
- Positionieren der Mehrschichtfolie (40) auf der Verbindungsschicht (60) derart, dass die Verbindungsfläche (41) der Mehrschichtfolie (40) mit der Verbindungsschicht (60) des faserverstärkten Verbindungsbauteils (30) in Kontakt kommt; und
- stoffschlüssiges Verbinden der Verbindungsfläche (41) der Mehrschichtfolie (40) mit der Verbindungsschicht (60) unter Ausbildung von zumindest einem zwischen der Mehrschichtfolie (40) und dem Basisbauteil (20) angeordneten Kühlfluidkanal (50) zur Leitung eines Kühlfluids.

18. Verfahren zum Herstellen einer Batteriegehäusekomponente (10) mit den Merkmalen des Anspruchs 7, wobei das Verfahren folgende Verfahrensschritte aufweist:
- Bereitstellen eine Spritzgusswerkzeugs, welches eine erste Spritzgusswerkzeughälfte und eine zweite Spritzgusswerkzeughälfte aufweist,
- wobei die erst Spritzgusswerkzeughälfte eine erste Vertiefung und eine von dieser beabstandete zweite Vertiefung aufweist,
- wobei die erste Spritzgusswerkzeughälfte bezüglich der zweiten Spritzgusswerkzeughälfte zwischen einer ersten Position und einer zweiten Position positionsveränderbar ist,
- wobei in einer Schließstellung des Spritzgusswerkzeugs und der ersten Position der ersten Spritzgusswerkzeughälfte das Spritzgusswerkzeug eine erste Kavität bildet, und
- wobei in der Schließstellung des Spritzgusswerkzeugs und der zweiten Position der ersten Spritzgusswerkzeughälfte das Spritzgusswerkzeug eine zweite Kavität bildet;
- Überführen der ersten Spritzgusswerkzeughälfte in deren erste Position und Schließen des Spritzgießwerkzeugs;
- Injizieren eines faserlosen thermoplastischen Kunststoffs in die erste Kavität unter Ausbildung der Verbindungsschicht (60);
- Öffnen des Spritzgusswerkzeugs;
- Überführen der ersten Spritzgusswerkzeughälfte in deren erste Position und Schließen des Spritzgießwerkzeugs;
- Injizieren eines ersten Kunststoffs in die zweite Kavität des Spritzgießwerkzeugs, so dass die Verbindungsschicht (60) mit dem ersten Kunststoff in direkten Kontakt kommt und mit dem ersten Kunststoff stoffschlüssig verbunden wird;
- Öffnen des Spritzgießwerkzeugs und Herausnehmen des Basisbauteils (20) und der mit diesem stoffschlüssig verbundenen Verbindungsschicht (60);
- Positionieren der Mehrschichtfolie (40) auf der Verbindungsschicht (60) derart, dass die Verbindungsfläche (41) der Mehrschichtfolie (40) mit der Verbindungsschicht (60) des faserverstärkten Verbindungsbauteils (30) in Kontakt kommt; und
- stoffschlüssiges Verbinden der Verbindungsfläche (41) der Mehrschichtfolie (40) mit der Verbindungsschicht (60) unter Ausbildung von zumindest einem zwischen der Mehrschichtfolie (40) und dem Basisbauteil (20) angeordneten Kühlfluidkanal (50) zur Leitung eines Kühlfluids.

## Claims

1. Battery housing component (10) for a traction battery (200) for cooling at least one battery component (11), the battery housing component (10) having the following features:
- the battery housing component (10) has a base part (20) which comprises a first plastics material;
- the battery housing component (10) has a fiber-reinforced bonding part (30) which has a bonding part inner surface (31) and a bonding part outer surface (32);
- the battery housing component (10) has a multilayer film (40), the multilayer film (40) having a bonding surface (41) and a contacting surface (42), the contacting surface (42) being designed for at least indirectly contacting the at least one battery component (11);
- the fiber-reinforced bonding part (30) is sandwiched between the base part (20) and the multilayer film (40); and
- a base part inner surface (21) of the base part (20) is materially bonded to the bonding part inner surface (31);
the battery housing component (10) being **characterized in that**
- the bonding surface (41) of the multilayer film (40) is materially bonded, by means of a bonding layer (60) made of a fiberless thermoplastic plastics material, to the bonding part outer surface (32) of the fiber-reinforced bonding part (30), forming at least one cooling fluid channel (50) for conveying a cooling fluid, said channel being arranged between the multilayer film (40) and the bonding part (30).

2. Battery housing component (10) according to claim 1, **characterized by** the following features:
- the bonding part (30) has a bonding part outer layer (33) which consists of a fiberless thermoplastic plastics material and is delimited by the bonding part outer surface (32); and
- the bonding layer (60) is at least partially formed by the bonding part outer layer (33).

3. Battery housing component (10) according to either of the preceding claims, **characterized by** the following features:
- the bonding part (30) has a bonding part inner layer (34) which consists of a fiberless thermoplastic plastics material and is delimited by the bonding part inner surface (31); and
- the base part (20) is materially bonded to the fiber-reinforced bonding part (30) by means of the bonding part inner layer (34).

4. Battery housing component (10) according to claim 3, **characterized by** the following features:
- the bonding part (30) has a central layer (35) which is arranged between the bonding part inner layer (34) and the bonding part outer layer (33); and
- the central layer (35) comprises a fiber material (36) which is arranged in a plastics material matrix.

5. Battery housing component (10) according to claim 4,
**characterized in that** the fiber material (36) has unidirectionally running fibers.

6. Battery housing component (10) according to claim 4,
**characterized in that** the fiber material (36) has multidirectionally running fibers.

7. Battery housing component (10) for a traction battery for cooling at least one battery component (11), the battery housing component (10) having the following features:
- the battery housing component (10) has a base part (20) which comprises a first plastics material;
- the battery housing component (10) has a multilayer film (40), the multilayer film (40) having a bonding surface (41) and a contacting surface (42), the contacting surface (42) being designed for at least indirectly contacting the at least one battery component (11);
the battery housing component (10) being **characterized in that**
- the bonding surface (41) of the multilayer film (40) is materially bonded, by means of a bonding layer (60) made of a fiberless thermoplastic plastics material, to a base part inner surface (21) of the base part (20), forming at least one cooling fluid channel (50) for conveying a cooling fluid, said channel being arranged between the multilayer film (40) and the base part (20).

8. Battery housing component (10) according to any of the preceding claims, **characterized by** the following features:
- the multilayer film (40) has an insulating layer (43) and a structural layer (44) bonded thereto; and
- the contacting surface (42) of the multilayer film (40) delimits the insulating layer (43).

9. Battery housing component (10) according to claim 8, **characterized by** the following features:
- the multilayer film (40) has a joining layer (45);
- the structural layer (44) is sandwiched between the insulating layer (43) and the joining layer (45); and
- the bonding layer (60) is at least partially formed by the joining layer (45).

10. Battery housing component (10) according to any of the preceding claims, **characterized in that** the base part (20) has reinforcing ribs (70) on a base part outer surface (22) which faces away from a base part inner surface (21).

11. Battery housing component (10) according to any of the preceding claims, **characterized in that** the battery housing component (10) has a protective plate (80) which is connected to the base part outer surface (22).

12. Traction battery housing (100) for receiving at least one battery component (11) in a receiving volume of the traction battery housing (100), having a battery housing component (10) according to any of the preceding claims.

13. Traction battery for a motor vehicle, having a traction battery housing (100) according to claim 12 and at least one battery component (10) which is arranged in the receiving volume of the traction battery housing (100) and is in at least indirect contact with the contacting surface (42) of the multilayer film (40).

14. Motor vehicle comprising a traction battery according to claim 13.

15. Method for manufacturing a battery housing component (10) comprising the features of claim 1, wherein the method has the following method steps:
- providing an injection mold which is adjustable between an open position and a closed position and which has a cavity;
- inserting a fiber-reinforced bonding part (30) into the cavity of the injection mold while the injection mold is in the open position;
- closing the injection mold;
- injecting a first plastics material into the cavity of the injection mold, with the result that the bonding part inner surface (31) comes into direct contact with the first plastics material and is materially bonded to the first plastics material;
- opening the injection mold and removing the base part (20) and the fiber-reinforced bonding part (30) materially bonded thereto;
- positioning the multilayer film (40) on the bonding part (30) such that the bonding surface (41) of the multilayer film (40) comes into contact with the bonding part outer surface (32) of the fiber-reinforced bonding part (30); and
- materially bonding the bonding surface (41) of the multilayer film (40) to the bonding part outer surface (32), forming at least one cooling fluid channel (50) for conveying a cooling fluid, said channel being arranged between the multilayer film (40) and the bonding part (30).

16. Method for manufacturing a battery housing component (10) comprising the features of claim 1, wherein the method has the following method steps:
- providing an extrusion tool having a punch and having a die with a receiving device;
- inserting a fiber-reinforced bonding part (30) into the receiving device of the die such that the bonding part inner surface (31) is freely accessible;
- positioning at least one plasticized substance, consisting of the first plastics material, on the bonding part inner surface (31);
- deforming the at least one plasticized substance by means of the punch, with the result that the at least one plasticized substance comes into contact with the entire bonding part inner surface (31) and the bonding part inner surface (31) is materially bonded to the first plastics material;
- removing the base part (20) and the fiber-reinforced bonding part (30) materially bonded thereto;
- positioning the multilayer film (40) on the bonding part (30) such that the bonding surface (41) of the multilayer film (40) comes into contact with the bonding part outer surface (32) of the fiber-reinforced bonding part (30); and
- materially bonding the bonding surface (41) of the multilayer film (40) to the bonding part outer surface (32), forming at least one cooling fluid channel (50) for conveying a cooling fluid, said channel being arranged between the multilayer film (40) and the bonding part (30).

17. Method for manufacturing a battery housing component (10) comprising the features of claim 7, wherein the method has the following method steps:
- providing an injection mold which is adjustable between an open position and a closed position and which has a slide, with the result that in a first position of the slide a first cavity is formed in the injection mold when the injection mold is in its closed position, and in a second position of the slide a second cavity is formed in the injection mold when the injection mold is in its closed position;
- moving the injection mold into its closed position and moving the slide into its first position;
- injecting a fiberless thermoplastic plastics material into the first cavity, forming the bonding layer (60);
- moving the slide to its second position;
- injecting a first plastics material into the second cavity of the injection mold, with the result that the bonding layer (60) comes into direct contact with the first plastics material and is materially bonded to the first plastics material;
- opening the injection mold and removing the base part (20) and the bonding layer (60) materially bonded thereto;
- positioning the multilayer film (40) on the bonding layer (60) such that the bonding surface (41) of the multilayer film (40) comes into contact with the bonding layer (60) of the fiber-reinforced bonding part (30); and
- materially bonding the bonding surface (41) of the multilayer film (40) to the bonding layer (60), forming at least one cooling fluid channel (50) for conveying a cooling fluid, said channel being arranged between the multilayer film (40) and the base part (20).

18. Method for manufacturing a battery housing component (10) comprising the features of claim 7, wherein the method has the following method steps:
- providing an injection mold which has a first injection mold half and a second injection mold half,
- wherein the first injection mold half has a first recess and a second recess spaced apart from said first recess,
- wherein the position of the first injection mold half relative to the second injection mold half is variable between a first position and a second position,
- wherein in a closed position of the injection mold and the first position of the first injection mold half, the injection mold forms a first cavity, and
- wherein in the closed position of the injection mold and the second position of the first injection mold half, the injection mold forms a second cavity;
- moving the first injection mold half into its first position and closing the injection mold;
- injecting a fiberless thermoplastic plastics material into the first cavity, forming the bonding layer (60);
- opening the injection mold;
- moving the first injection mold half into its first position and closing the injection mold;
- injecting a first plastics material into the second cavity of the injection mold, with the result that the bonding layer (60) comes into direct contact with the first plastics material and is materially bonded to the first plastics material;
- opening the injection mold and removing the base part (20) and the bonding layer (60) materially bonded thereto;
- positioning the multilayer film (40) on the bonding layer (60) such that the bonding surface (41) of the multilayer film (40) comes into contact with the bonding layer (60) of the fiber-reinforced bonding part (30); and
- materially bonding the bonding surface (41) of the multilayer film (40) to the bonding layer (60), forming at least one cooling fluid channel (50) for conveying a cooling fluid, said channel being arranged between the multilayer film (40) and the base part (20).

## Revendications

1. Composant de boîtier pour batterie (10) pour une batterie de traction (200) pour le refroidissement d'au moins un composant de batterie (11), dans lequel le composant de boîtier pour batterie (10) présente les caractéristiques suivantes :
- le composant de boîtier pour batterie (10) présente une pièce de base (20) qui présente une première matière plastique ;
- le composant de boîtier pour batterie (10) présente une pièce de liaison renforcée de fibres (30) qui présente une surface intérieure de pièce de liaison (31) et une surface extérieure de pièce de liaison (32) ;
- le composant de boîtier pour batterie (10) présente une feuille multicouche (40), dans lequel la feuille multicouche (40) présente une surface de connexion (41) et une surface de mise en contact (42), dans lequel la surface de mise en contact (42) est conçue pour la mise en contact au moins indirecte de l'au moins un composant de batterie (11) ;
- la pièce de liaison renforcée de fibres (30) est prise en sandwich entre la pièce de base (20) et la feuille multicouche (40) ; et
- une surface intérieure de pièce de base (21) de la pièce de base (20) est reliée par liaison de matière à la surface intérieure de pièce de liaison (31) ;
dans lequel le composant de boîtier pour batterie (10) est
**caractérisé en ce que**
- la surface de connexion (41) de la feuille multicouche (40) est reliée par liaison de matière à la surface extérieure de pièce de liaison (32) de la pièce de liaison renforcée de fibres (30) en formant au moins un canal pour fluide de refroidissement (50) disposé entre la feuille multicouche (40) et la pièce de liaison (30) pour la conduite d'un fluide de refroidissement au moyen d'une couche de liaison (60) en une matière thermoplastique sans fibres.

2. Composant de boîtier pour batterie (10) selon la revendication 1,
**caractérisé par** les caractéristiques suivantes :
- la pièce de liaison (30) présente une couche extérieure de pièce de liaison (33) constituée d'une matière thermoplastique sans fibres et délimitée par la surface extérieure de pièce de liaison (32) ; et
- la couche de liaison (60) est formée au moins partiellement par la couche extérieure de pièce de liaison (33).

3. Composant de boîtier pour batterie (10) selon l'une des revendications précédentes, **caractérisé par** les caractéristiques suivantes :
- la pièce de liaison (30) présente une couche intérieure de pièce de liaison (34) constituée d'une matière thermoplastique sans fibres et délimitée par la surface intérieure de pièce de liaison (31) ; et
- la pièce de base (20) est reliée par liaison de matière à la pièce de liaison renforcée de fibres (30) au moyen de la couche intérieure de pièce de liaison (34).

4. Composant de boîtier pour batterie (10) selon la revendication 3,
**caractérisé par** les caractéristiques suivantes :
- la pièce de liaison (30) présente une couche centrale (35) disposée entre la couche intérieure de pièce de liaison (34) et la couche extérieure de pièce de liaison (33) ; et
- la couche centrale (35) présente un matériau fibreux (36) qui est disposé dans une matrice matérielle en matière plastique.

5. Composant de boîtier pour batterie (10) selon la revendication 4,
**caractérisé en ce que** le matériau fibreux (36) présente des fibres s'étendant de manière unidirectionnelle.

6. Composant de boîtier pour batterie (10) selon la revendication 4,
**caractérisé en ce que** le matériau fibreux (36) présente des fibres s'étendant de manière multidirectionnelle.

7. Composant de boîtier pour batterie (10) pour une batterie de traction pour le refroidissement d'au moins un composant de batterie (11), dans lequel le composant de boîtier pour batterie (10) présente les caractéristiques suivantes :
- le composant de boîtier pour batterie (10) présente une pièce de base (20) qui présente une première matière plastique ;
- le composant de boîtier pour batterie (10) présente une feuille multicouche (40), dans lequel la feuille multicouche (40) présente une surface de connexion (41) et une surface de mise en contact (42), dans lequel la surface de mise en contact (42) est conçue pour la mise en contact au moins indirecte de l'au moins un composant de batterie (11) ;
dans lequel le composant de boîtier pour batterie (10) est
**caractérisé en ce que**
- la surface de connexion (41) de la feuille multicouche (40) est reliée par liaison de matière à une surface intérieure de pièce de base (21) de la pièce de base (20) en formant au moins un canal pour fluide de refroidissement (50) disposé entre la feuille multicouche (40) et la pièce de base (20) pour la conduite d'un fluide de refroidissement au moyen d'une couche de liaison (60) en une matière thermoplastique sans fibres.

8. Composant de boîtier pour batterie (10) selon l'une des revendications précédentes, **caractérisé par** les caractéristiques suivantes :
- la feuille multicouche (40) présente une couche d'isolation (43) et une couche structurelle (44) qui peut être reliée à celle-ci ; et
- la surface de mise en contact (42) de la feuille multicouche (40) délimite la couche d'isolation (43).

9. Composant de boîtier pour batterie (10) selon la revendication 8,
**caractérisé par** les caractéristiques suivantes :
- la feuille multicouche (40) présente une couche d'assemblage (45) ;
- la couche structurelle (44) est prise en sandwich entre la couche d'isolation (43) et la couche d'assemblage (45) ; et
- la couche de liaison (60) est formée au moins partiellement par la couche d'assemblage (45).

10. Composant de boîtier pour batterie (10) selon l'une des revendications précédentes, **caractérisé en ce que** la pièce de base (20) présente des nervures de renforcement (70) sur une surface extérieure de pièce de base (22) qui est opposée à une surface intérieure de pièce de base (21).

11. Composant de boîtier pour batterie (10) selon l'une des revendications précédentes, **caractérisé en ce que** le composant de boîtier pour batterie (10) présente une plaque de protection (80) qui est reliée à la surface extérieure de pièce de base (22).

12. Boîtier pour batterie de traction (100) pour la réception d'au moins un composant de batterie (11) dans un volume de réception du boîtier pour batterie de traction (100), présentant un composant de boîtier pour batterie (10) selon l'une des revendications précédentes.

13. Batterie de traction pour un véhicule automobile, présentant un boîtier pour batterie de traction (100) selon la revendication 12 et au moins un composant de batterie (10) qui est disposé dans le volume de réception du boîtier pour batterie de traction (100) et qui est en contact au moins indirect avec la surface de mise en contact (42) de la feuille multicouche (40).

14. Véhicule automobile comportant une batterie de traction selon la revendication 13.

15. Procédé de fabrication d'un composant de boîtier pour batterie (10) comportant les caractéristiques de la revendication 1, dans lequel le procédé présente les étapes de procédé suivantes :
- fourniture d'un outil de moulage par injection qui est réglable entre une position ouverte et une position fermée et qui présente une cavité ;
- insertion d'une pièce de liaison renforcée de fibres (30) dans la cavité de l'outil de moulage par injection se trouvant en position ouverte ;
- fermeture de l'outil de moulage par injection ;
- injection d'une première matière plastique dans la cavité de l'outil de moulage par injection de sorte que la surface intérieure de pièce de liaison (31) entre en contact direct avec la première matière plastique et est reliée par liaison de matière à la première matière plastique ;
- ouverture de l'outil de moulage par injection et extraction de la pièce de base (20) et de la pièce de liaison renforcée de fibres (30) reliée par liaison de matière à celle-ci ;
- positionnement de la feuille multicouche (40) sur la pièce de liaison (30) de telle sorte que la surface de connexion (41) de la feuille multicouche (40) entre en contact avec la surface extérieure de pièce de liaison (32) de la pièce de liaison renforcée de fibres (30) ; et
- liaison par liaison de matière de la surface de connexion (41) de la feuille multicouche (40) à la surface extérieure de pièce de liaison (32) en formant au moins un canal pour fluide de refroidissement (50) disposé entre la feuille multicouche (40) et la pièce de liaison (30) pour la conduite d'un fluide de refroidissement.

16. Procédé de fabrication d'un composant de boîtier pour batterie (10) comportant les caractéristiques de la revendication 1, dans lequel le procédé présente les étapes de procédé suivantes :
- fourniture d'un outil d'extrusion présentant une matrice comportant un dispositif de réception et un poinçon ;
- insertion d'une pièce de liaison renforcée de fibres (30) dans le dispositif de réception de la matrice de telle sorte que la surface intérieure de pièce de liaison (31) est librement accessible ;
- positionnement d'au moins un plastifiant constitué de la première matière plastique sur la surface intérieure de pièce de liaison (31) ;
- déformation de l'au moins un plastifiant au moyen du poinçon de sorte que l'au moins un plastifiant entre en contact avec l'ensemble de la surface intérieure de pièce de liaison (31) et que la surface intérieure de pièce de liaison (31) est reliée par liaison de matière à la première matière plastique ;
- retrait de la pièce de base (20) et de la pièce de liaison renforcée de fibres (30) reliée par liaison de matière à celle-ci ;
- positionnement de la feuille multicouche (40) sur la pièce de liaison (30) de telle sorte que la surface de connexion (41) de la feuille multicouche (40) entre en contact avec la surface extérieure de pièce de liaison (32) de la pièce de liaison renforcée de fibres (30) ; et
- liaison par liaison de matière de la surface de connexion (41) de la feuille multicouche (40) à la surface extérieure de pièce de liaison (32) en formant au moins un canal pour fluide de refroidissement (50) disposé entre la feuille multicouche (40) et la pièce de liaison (30) pour la conduite d'un fluide de refroidissement.

17. Procédé de fabrication d'un composant de boîtier pour batterie (10) comportant les caractéristiques de la revendication 7, dans lequel le procédé présente les étapes de procédé suivantes :
- fourniture d'un outil de moulage par injection qui est réglable entre une position ouverte et une position fermée et qui présente un coulisseau de sorte que, dans une première position du coulisseau, une première cavité est formée dans l'outil de moulage par injection dans sa position fermée et, dans une seconde position du coulisseau, une seconde cavité est formée dans l'outil de moulage par injection dans sa position fermée ;
- transfert de l'outil de moulage par injection dans sa position fermée et transfert du coulisseau dans sa première position ;
- injection d'une matière thermoplastique sans fibres dans la première cavité en formant la couche de liaison (60) ;
- transfert du coulisseau dans sa seconde position ;
- injection d'une première matière plastique dans la seconde cavité de l'outil de moulage par injection de sorte que la couche de liaison (60) entre en contact direct avec la première matière plastique et est reliée par liaison de matière à la première matière plastique ;
- ouverture de l'outil de moulage par injection et extraction de la pièce de base (20) et de la couche de liaison (60) reliée par liaison de matière à celle-ci ;
- positionnement de la feuille multicouche (40) sur la couche de liaison (60) de telle sorte que la surface de connexion (41) de la feuille multicouche (40) entre en contact avec la couche de liaison (60) de la pièce de liaison renforcée de fibres (30) ; et
- liaison par liaison de matière de la surface de connexion (41) de la feuille multicouche (40) à la couche de liaison (60) en formant au moins un canal pour fluide de refroidissement (50) disposé entre la feuille multicouche (40) et la pièce de base (20) pour la conduite d'un fluide de refroidissement.

18. Procédé de fabrication d'un composant de boîtier pour batterie (10) comportant les caractéristiques de la revendication 7, dans lequel le procédé présente les étapes de procédé suivantes :
- fourniture d'un outil de moulage par injection présentant une première moitié d'outil de moulage par injection et une seconde moitié d'outil de moulage par injection,
- dans lequel la première moitié d'outil de moulage par injection présente une première cavité et une seconde cavité espacée de celle-ci,
- dans lequel la première moitié d'outil de moulage par injection peut être modifiée en position entre une première position et une seconde position par rapport à la seconde moitié d'outil de moulage par injection,
- dans lequel, dans une position fermée de l'outil de moulage par injection et dans la première position de la première moitié d'outil de moulage par injection, l'outil de moulage par injection forme une première cavité, et
- dans lequel, dans la position fermée de l'outil de moulage par injection et dans la seconde position de la première moitié d'outil de moulage par injection, l'outil de moulage par injection forme une seconde cavité ;
- transfert de la première moitié d'outil de moulage par injection dans sa première position et fermeture de l'outil de moulage par injection ;
- injection d'une matière thermoplastique sans fibres dans la première cavité en formant la couche de liaison (60) ;
- ouverture de l'outil de moulage par injection ;
- transfert de la première moitié d'outil de moulage par injection dans sa première position et fermeture de l'outil de moulage par injection ;
- injection d'une première matière plastique dans la seconde cavité de l'outil de moulage par injection de sorte que la couche de liaison (60) entre en contact direct avec la première matière plastique et est reliée par liaison de matière à la première matière plastique ;
- ouverture de l'outil de moulage par injection et extraction de la pièce de base (20) et de la couche de liaison (60) reliée par liaison de matière à celle-ci ;
- positionnement de la feuille multicouche (40) sur la couche de liaison (60) de telle sorte que la surface de connexion (41) de la feuille multicouche (40) entre en contact avec la couche de liaison (60) de la pièce de liaison renforcée de fibres (30) ; et
- liaison par liaison de matière de la surface de connexion (41) de la feuille multicouche (40) à la couche de liaison (60) en formant au moins un canal pour fluide de refroidissement (50) disposé entre la feuille multicouche (40) et la pièce de base (20) pour la conduite d'un fluide de refroidissement.
